# EUROPÄISCHE PATENTSCHRIFT

(11) **EP 0 981 416 B1**
(45) Veröffentlichungstag und Bekanntmachung des Hinweises auf die Patenterteilung: **27.03.2002**
(21) Anmeldenummer: 98929321.2
(22) Anmeldetag: 15.05.1998
(51) Int. Cl.: B23B 29/02

(54) **WERKZEUG MIT EINEM GRUNDKÖRPER SOWIE VERFAHREN ZUR BEARBEITUNG VON BOHRUNGEN IN EINEM WERKSTÜCK UNTER VERWENDUNG EINES SOLCHEN WERKZEUGES**
TOOL WITH A BASE BODY AND METHOD FOR FORMING BORES IN A WORK PIECE USING SUCH A TOOL
OUTIL COMPORTANT UN CORPS DE BASE ET PROCEDE PERMETTANT DE PRATIQUER DES ALESAGES DANS UNE PIECE A L'AIDE D'UN TEL OUTIL

(30) Priorität: 16.05.1997 DE 19720823
(43) Veröffentlichungstag der Anmeldung: 01.03.2000
(73) Patentinhaber: MAPAL Fabrik für Präzisionswerkzeuge Dr. Kress KG, D-73431 Aalen (DE)
(72) Erfinder: KURZ, Artur, D-73240 Wendlingen (DE)
(74) Vertreter: Gleiss, Alf-Olav, Dipl.-Ing.
(86) Internationale Anmeldenummer: EP9802868
(87) Internationale Veröffentlichungsnummer: WO9852710

(56) Entgegenhaltungen:
- DE-A- 1 917 646
- US-A- 2 207 861
- US-A- 3 438 288
- US-A- 3 591 304
- US-A- 3 961 857
- US-A- 4 666 350

## Beschreibung

Die Erfindung betrifft ein Werkzeug nach dem Oberbegriff des Anspruches 1 sowie ein Verfahren zur Bearbeitung von Werkstücken von Bohrungen in einem Werkstück unter Verwendung eines solchen Werkzeuges nach dem Oberbegriff des Anspruches 44 bzw. 49.

Ein gattungsgemäß Werkzeug ist z.B. aus US-A-3 438 288 bekannt.

Mit einem solchen Werkzeug werden axial mit Abstand hintereinander angeordnete Bohrungen in einem Werkstück spanabhebend bearbeitet. Da die Bohrungen oft gleichen Durchmesser aufweisen, koaxial zueinander angeordnet und die Werkzeugschneiden fest eingestellt sind, ist das Einführen des Werkzeuges in die Bohrungen aufwendig und schwierig.

Der Erfindung liegt die Aufgabe zugrunde, das gattungsgemäße Werkzeug und das gattungsgemäße Verfahren so auszubilden, daß das Werkzeug zur Bearbeitung der Bohrungen einfach in das Werkstück eingefahren werden kann.

Diese Aufgabe wird beim gattungsgemäßen Werkzeug erfindungsgemäß mit den kennzeichnenden Merkmalen des Anspruches 1 und beim gattungsgemäßen Verfahren erfindungsgemäß mit den kennzeichnenden Merkmalen des Anspruches 44 bzw. 49 gelöst.

Das erfindungsgemäße Werkzeug wird exzentrisch in bezug auf die Achse der zu bearbeitenden Bohrungen in das Werkstück bewegt. Aufgrund dieser exzentrischen Lage läßt sich das Werkzeug mühelos in die Bohrungen einfahren. Sobald sich die Schneiden des Werkzeuges unmittelbar vor den zu bearbeitenden Bohrungen befinden, wird das Werkzeug mittels des Hubelementes aus seiner exzentrischen Lage in seine zentrische Lage verstellt. Dann fällt die Achse des erfindungsgemäßen Werkzeuges mit der Achse der Werkstückbohrungen zusammen. Dann kann mit den Schneiden des rotierend angetriebenen Werkzeuges die Bearbeitung der Bohrungen vorgenommen werden, wobei das Werkzeug in seiner zentrischen Lage in Achsrichtung bewegt wird.

Beim Verfahren nach Anspruch 49 wird das Werkzeug exzentrisch in die Bohrungen eingefahren und anschließend mit der Maschinenachse in die zentrische Lage verstellt. Dann erst wird das Hubelement so verstellt, daß das Werkzeug während der Bearbeitung abgestützt wird.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen:
- Fig. 1: teilweise in Ansicht und teilweise im Schnitt ein erfindungsgemäßes, als Bohrstange ausgebildetes Werkzeug, das in ein zu bearbeitendes Werkstück eingefahren ist und exzentrisch in bezug auf die Führungslager bzw. die zu bearbeitenden Werkstückbohrungen angeordnet ist,
- Fig. 2: eine Ansicht in Richtung des Pfeiles x in Fig. 1,
- Fig. 3: das erfindungsgemäße Werkzeug gemäß Fig. 1 in zentrischer Lage in bezug auf die Führungslager bzw. die zu bearbeitenden Werkstückbohrungen,
- Fig. 4: eine Ansicht in Richtung des Pfeiles x in Fig. 3,
- Fig. 5: das erfindungsgemäße Werkzeug nach der Bearbeitung der Werkstückbohrungen,
- Fig. 6: in schematischer Darstellung einen Schnitt durch das Werkzeug gemäß den Fig. 1 bis 5,
- Fig. 7: teilweise in Ansicht und teilweise im Axialschnitt das Werkzeug gemäß Fig. 6,
- Fig. 8: in einer Darstellung entsprechend Fig. 6 eine zweite Ausführungsform eines erfindungsgemäßen Werkzeuges,
- Fig. 9: in einer Darstellung entsprechend Fig. 6 eine dritte Ausführungsform eines erfindungsgemäßen Werkzeuges,
- Fig. 10: teilweise in Ansicht und teilweise im Schnitt eine weitere Ausführungsform eines erfindungsgemäßen Werkzeuges,
- Fig. 11: das Werkzeug gemäß Fig. 10 bei weiter in das Werkstück eingefahrener Stellung,
- Fig. 12: ein erfindungsgemäßes Werkzeug, das mit außen liegenden Führungslagern bei der Werkstückbearbeitung abgestützt wird,
- Fig. 13: das Werkzeug gemäß Fig. 12 bei weiter in das Werkstück hineingefahrener Lage,
- Fig. 14: in einer Darstellung entsprechend Fig. 1 eine weitere Ausführungsform eines erfindungsgemäßen Werkzeuges,
- Fig. 15: die Einzelheit Y in Fig. 14 in vergrößerter Darstellung und in Außerbetriebsstellung,
- Fig. 16: die Einzelheit gemäß Fig. 15 in Meßstellung,
- Fig. 17 und Fig. 18: jeweils in schematischer Darstellung und in Stirnansicht zwei weitere Ausführungs- formen von erfindungsgemäßen Werkzeugen.

Mit dem im folgenden beschriebenen Werkzeug werden mehrere Bohrungen gleichzeitig bearbeitet. Es hat einen Grundkörper 1, der über seine Länge verteilt angeordnete Schneiden 2 bis 5 trägt. Mit ihnen werden koaxial zueinander liegende Bohrungen 6 bis 9 in einem Werkstück 10 gleichzeitig bearbeitet. Die Bohrungen 6 bis 9 sind in Stegen 11 bis 14 des Werkstückes 10 vorgesehen, die mit Abstand voneinander liegen. In den Bereichen zwischen den Stegen 11 und 12 sowie 13 und 14 wird jeweils ein Führungslager 15 und 16 eingebracht. Der Durchmesser der Führungslager 15, 16 ist größer als die zu bearbeitenden Bohrungen 6 bis 9. Dadurch können Folgeoperationen, wie Honen, ohne Umspannen durchgeführt werden.

Der Grundkörper 1 des Werkzeuges ist zylindrisch ausgebildet und wird an eine (nicht dargestellte) Arbeitsspindel angeschlossen, mit der das Werkzeug zur Bearbeitung der Bohrungen 6 bis 9 um seine Achse rotierend angetrieben wird.

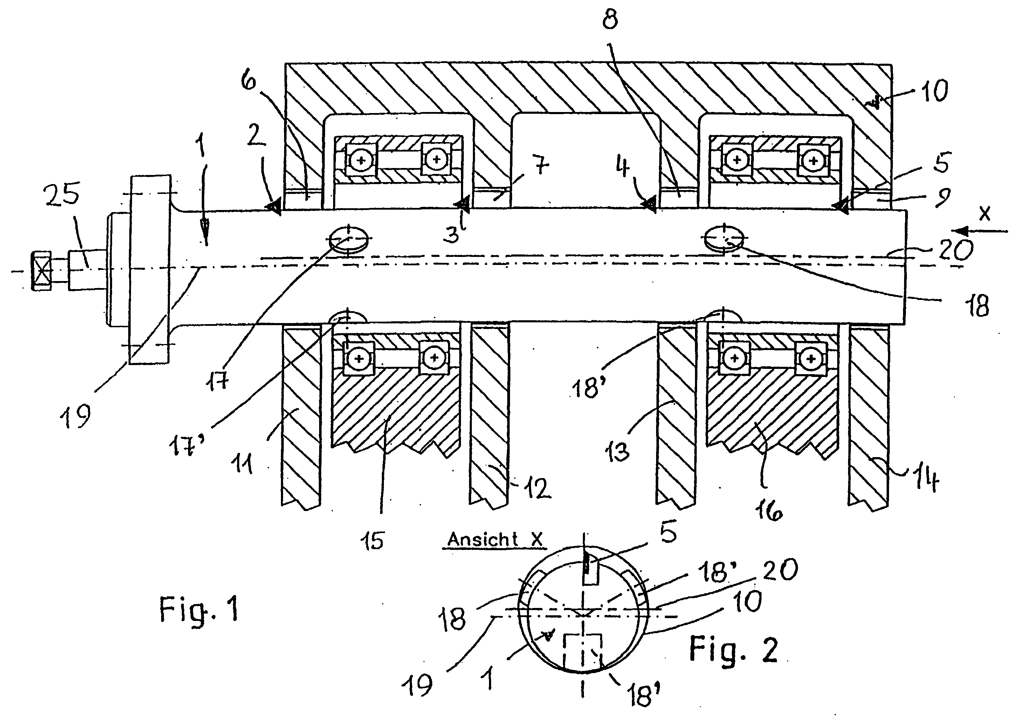

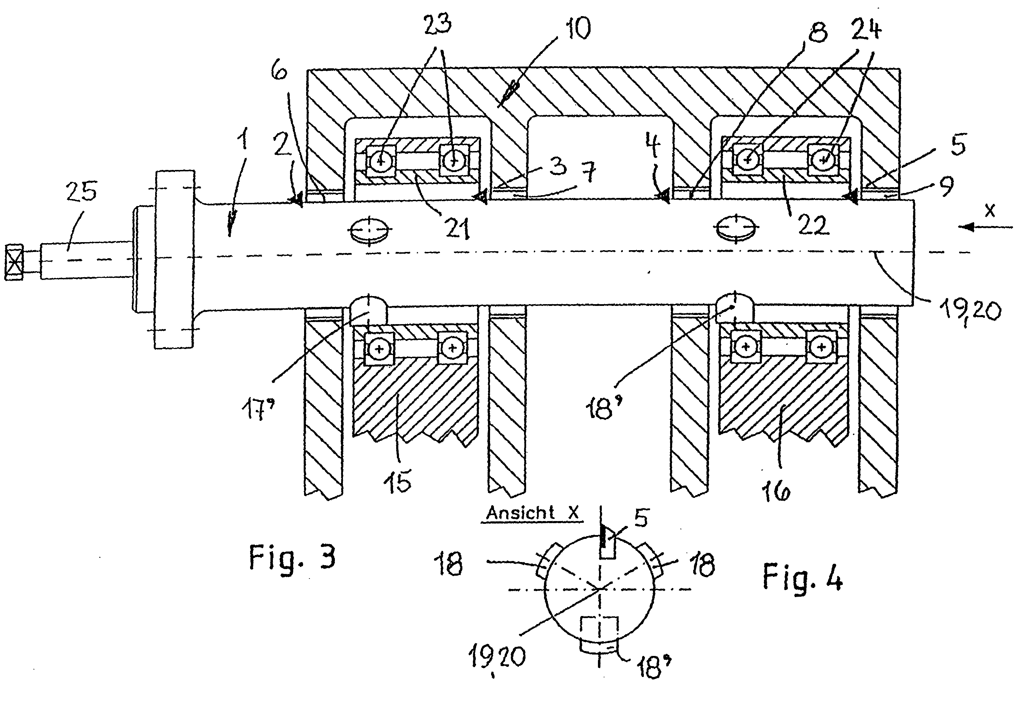

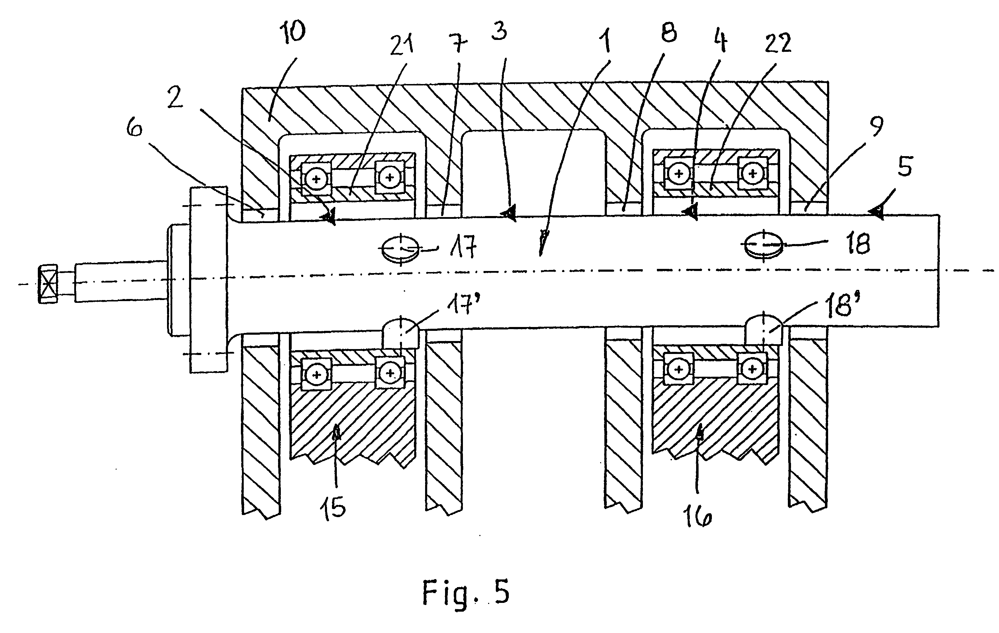

Im Grundkörper 1 sind Stützelemente 17, 18 untergebracht. Im Ausführungsbeispiel sind jeweils drei Stützelemente 17 und 18 vorgesehen, die über den Umfang des Grundkörpers 1 jeweils gleichmäßig verteilt angeordnet sind (Fig. 2). Die Stützelemente 17 und 18 liegen mit einem solchen Abstand voneinander, daß sie bei der Bearbeitung der Werkstückbohrungen 6 bis 9 an den Führungslagern 15 und 16 anliegen (Fig. 3 und 5).

Von den drei, jeweils in einer Radialebene liegenden Stützelementen 17 und 18 ist ein Stützelement radial verschiebbar im Grundkörper 1 angeordnet, während die beiden anderen Stützelemente 17 und 18 jeweils unverschieblich im Grundkörper 1 vorgesehen sind.

Zum Bearbeiten der Werkstückbohrungen 6 bis 9 wird der Grundkörper 1 in bezug auf die Achse der Bohrungen 6 bis 9 exzentrisch eingefahren (Fig. 1). Aufgrund der radial versetzten Lage kann der Grundkörper 1 mit den Schneiden 2 bis 5 eingefahren werden, ohne daß diese mit der Wandung der Bohrungen 6 bis 9 in Berührung kommen. Die den Schneiden 2 bis 5 gegenüberliegenden Stützelemente 17', 18' sind radial eingefahren, wie dies in Fig. 2 für das Stützelement 18' dargestellt ist. Dadurch liegt der Grundkörper 1 in diesem Bereich mit seiner Außenseite an den Bohrungswandungen an. Die jeweils beiden anderen Stützelemente 17, 18, die nicht radial verstellbar im Grundkörper 1 vorgesehen sind, haben infolge der radial versetzten Lage des Grundkörpers 1 beim Einfahren in die Bohrungen Abstand von der Bohrungswandung (Fig. 2). Auch die Schneiden 2 bis 5 haben dadurch ausreichenden Abstand von der Wandung der Bohrungen 6 bis 9.

Sobald das Werkzeug 1 in das Werkstück 10 eingefahren ist (Fig. 3), wird das Werkzeug radial zurückgefahren, so daß seine Achse 19 mit der Achse 20 der Bohrungen 6 bis 9 zusammenfällt. Das radiale Versetzen des Werkzeuges bzw. des Grundkörpers 1 wird vorteilhaft durch radiales Ausfahren der Stützelemente 17', 18' erreicht, die sich beim Ausfahren am jeweiligen Führungslager 15, 16 abstützen. Wie Fig. 3 zeigt, befinden sich die Schneiden 2 bis 5 beim Ausfahren der Stützelemente 17', 18' noch außerhalb der von ihnen jeweils zu bearbeitenden Bohrungen 6 bis 9. Die Stützelemente 17', 18' bilden somit Hubelemente.

Die Führungslager 15, 16 haben einen Innenring 21, 22, der durch Wälzlager 23, 24 drehbar gelagert ist.

Um die Stützelemente 17', 18' radial auszufahren, ist im Grundkörper 1 zentrisch und axial eine Stellstange 25 gelagert, die gegenüber dem Grundkörper 1 axial verschiebbar ist und dadurch in noch zu beschreibender Weise die Stützelemente 17', 18' radial im Grundkörper 1 verschiebt. Ist die Stellstange 25 in den Grundkörper 1 eingefahren (Fig.1), sind die Stützelemente 17', 18' radial nach innen verstellt. Wird die Stellstange 25 ausgefahren (Fig. 2), werden die Stützelemente 17', 18' radial ausgefahren.

Sobald der Grundkörper 1 in den Innenringen 21, 22 der Führungslager 15, 16 zentriert ist (Fig. 3), wird das Werkzeug rotierend angetrieben und axial verschoben. Dabei bearbeiten die Schneiden 2 bis 5 die Bohrungen 6 bis 9. Während des Axialvorschubes wird der Grundkörper 1 durch die Stützelemente 17, 17' und 18, 18' an der Innenwandung der Innenringe 21, 22 der Führungslager 15, 16 abgestützt.

Die Führungslager 15, 16 sind so breit, daß die Stützelemente 17, 17', 18, 18' an den Innenringen 21, 22 der Führungslager 15, 16 abgestützt sind, solange die Schneiden 2 bis 5 die Bohrungen 6 bis 9 über deren axiale Breite bearbeiten. Fig. 5 zeigt die Endstellung des Werkzeuges bzw. seines Grundkörpers 1, wenn das Werkstück 10 fertig bearbeitet ist. Die Schneiden 2 bis 5 befinden sich nunmehr außerhalb der Bohrungen 6 bis 9, während sich die Stützelemente 17, 17', 18, 18' an dem in Vorschubrichtung hinteren Ende der Führungslager 15, 16 befinden.

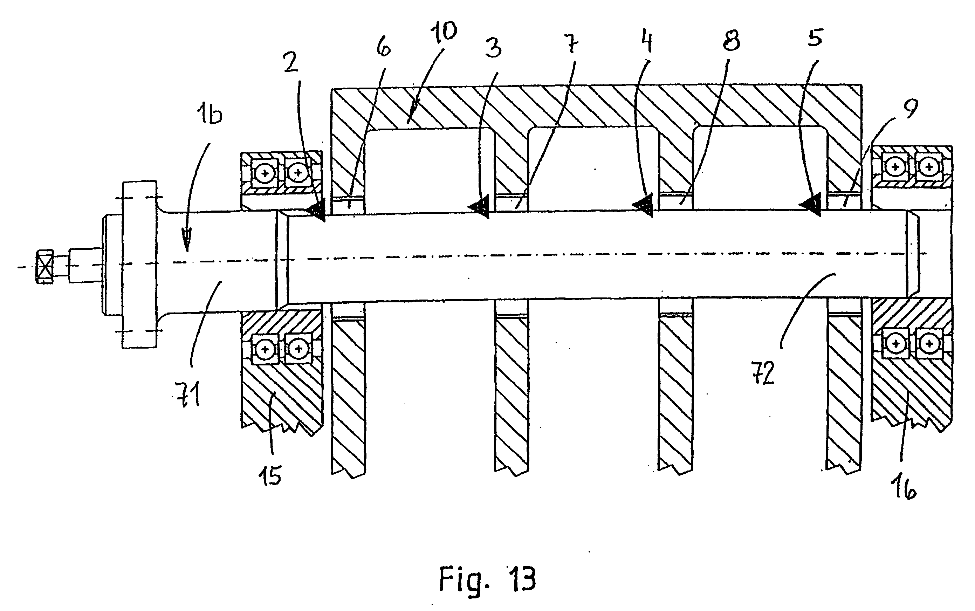

Das gleiche Verfahren ist auch bei Führungslagern 15, 16 möglich, die sich nicht innerhalb des Werkstückes 10, sondern außerhalb des Werkstückes befinden, wie beispielhaft in Fig. 13 gezeigt. Dies ist beispielsweise bei einer Mehrspindelbearbeitung möglich, wenn andere Werkzeuge fest geführt werden.

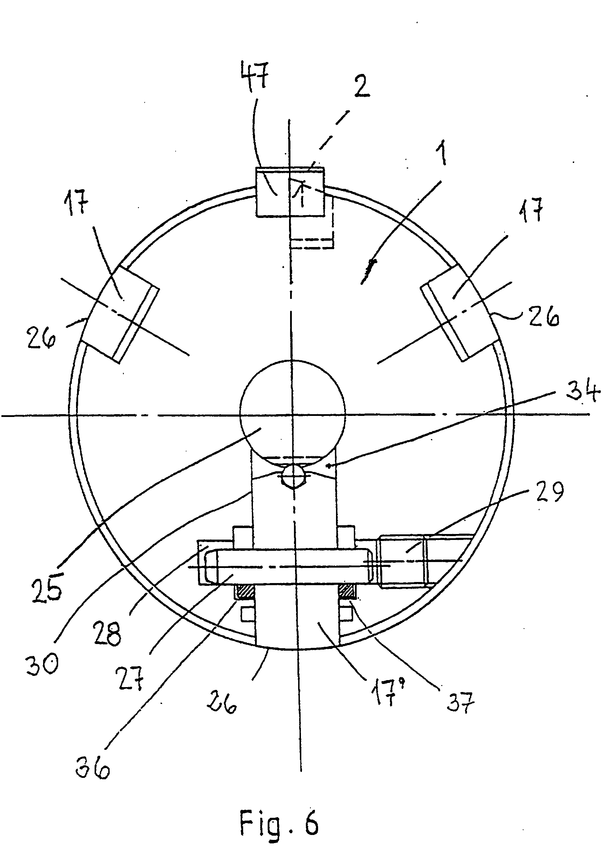

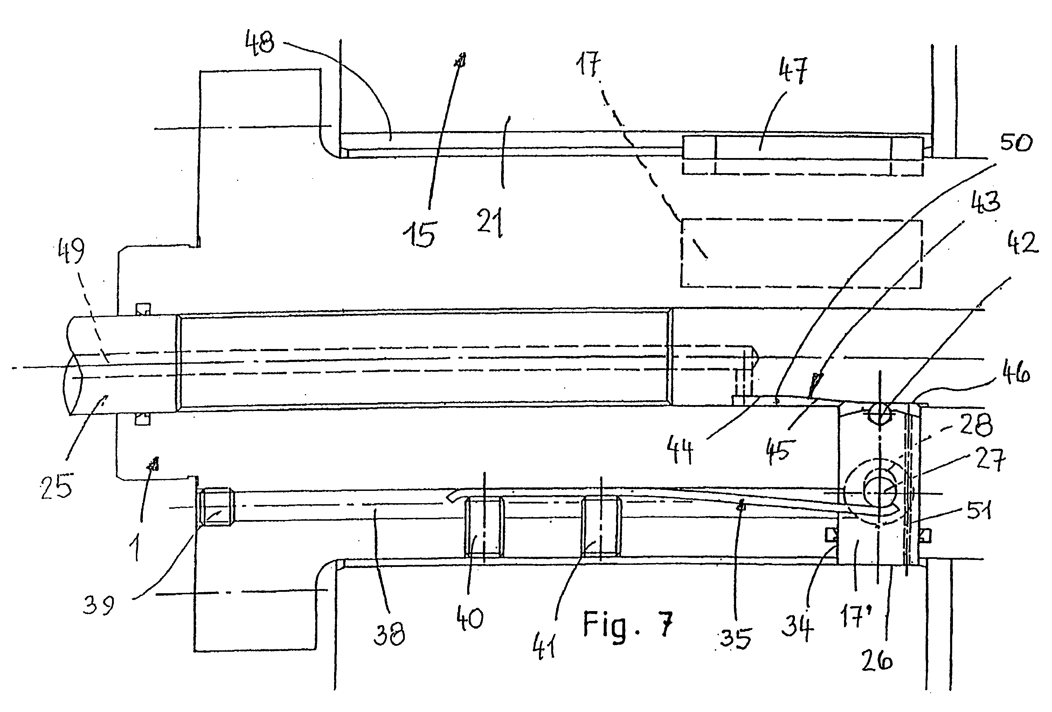

Anhand der Fig. 6 und 7 wird die Verstellung des Stützelementes 17' näher erläutert. Das andere Stützelement 18' wird in entsprechend gleicher Weise radial verstellt. Die feststehenden Stützelemente 17 stehen über den Umfang des Grundkörpers 1 vor und liegen während der Bearbeitung der Bohrungen 6 bis 9 am Innenring 21 des Führungslagers 15 an (Fig. 3 und 5). Die Außenseiten 26 der Stützelemente 17, 17' liegen koaxial zum Grundkörper 1 (Fig. 6), so daß die Stützelemente in der Arbeitslage (Fig. 3 und 5) des Werkzeuges mit ihren Außenseiten 26 flächig am Innenring 21 des Führungslagers 15 anliegen.

Das radial verstellbare Stützelement 17' wird von einer Achse 27 durchsetzt, die mit ihren beiden Enden in eine Querbohrung 28 des Grundkörpers 1 ragt (Fig. 6). Die Querbohrung 28 wird durch eine versenkt im Grundkörper 1 angeordnete Stiftschraube 29 geschlossen. Das vorzugsweise als runder Bolzen ausgebildete Stützelement 17' ist in einer Radialbohrung 34 im Grundkörper 1 geführt. Die Querbohrung 28 durchsetzt Seitenwandungen 32 der Radialbohrung 34. An der von der Stellstange 25 abgewandten Seite der Achse 27 greift eine Rückholfeder 35 an, die das Stützelement 17' radial nach innen belastet. Die Rückholfeder 35 ist als Blattfeder ausgebildet und weist im Bereich des Stützelementes 17' eine Ausnehmung auf, so daß das Stützelement 17' von zwei Federschenkeln 36, 37 (Fig. 6) umfaßt wird. Die freien Enden der Federschenkel 36, 37 sind, wie Fig. 7 zeigt, leicht aufwärts gebogen, so daß sie flächig an der Achse 27 des Stützelementes 17' anliegen. Die Rückholfeder 35 ist in einem Aufnahmeraum 38 untergebracht, der sich parallel zur Achse des Grundkörpers 1 erstreckt und im Bereich zwischen der Stellstange 25 und der Außenseite des Grundkörpers 1 vorgesehen ist. Der axial verlaufende Aufnahmeraum 38 wird durch eine Stiftschraube 39 geschlossen. Die Rückholfeder 35 wird durch eine oder zwei mit Abstand voneinander liegende Klemmschrauben 40, 41, die radial in den Grundkörper 1 geschraubt sind, gegen die Wandung des Aufnahmeraumes 38 gedrückt. Der Abstand der Klemmschraube 41 vom Stützelement 17' ist größer als der Abstand zur Klemmschraube 40, so daß ein ausreichender Federweg zur Verfügung steht, um eine ausreichend hohe Rückholkraft auf das Stützelement 17' auszuüben.

Das Stützelement 17' liegt abgedichtet im radialen Aufnahmeraum 34 und weist an seiner der Stellstange 25 zugewandten Stirnseite eine Kugel 42 auf, mit der das Stützelement 17' an einer Steuerfläche 43 der Stellstange 25 anliegt. Die Steuerfläche 43 hat einen ebenen Flächenabschnitt 44, der stumpfwinklig in einen schrägen, radial nach außen verlaufenden Steuerabschnitt 45 übergeht. Er schließt an einen geraden, radial außen liegenden und zum Flächenabschnitt 44 parallelen Flächenabschnitt 46 an. Die Länge des Flächenabschnittes 46 der Steuerfläche 43 richtet sich nach dem erforderlichen Axialhub der Stellstange 25 bei einer Paßlagerbearbeitung, bei der die auf Schiebern befindlichen Schneiden in an sich bekannter Weise ebenfalls durch die Stellstange 25 angesteuert werden. Dabei stützt sich das Stützelement 17' am geraden Flächenabschnitt 46 ab, dessen Länge durch den erforderlichen Hub des Schiebers für die Paßlagerbearbeitung bestimmt wird.

Wie sich aus Fig. 7 ergibt, sind die Stützelemente 17 im Axialschnitt in diesem Beispiel rechteckförmig ausgebildet. Die starr im Grundkörper 1 angeordneten Stützelemente 17 sind in Achsrichtung des Werkzeuges wesentlich länger als das radial verstellbare Stützelement 17', das dafür radial länger ist als die starren Stützelemente 17.

Im Bereich zwischen den starren Stützelementen 17 ist ein Mitnehmer 47 vorgesehen, der über den Umfang des Grundkörpers 1 radial vorsteht und in eine axiale Nut 48 in der Innenwandung des Innenringes 21 des Führungslagers 15 eingreift. Auf diese Weise ist der Innenring 21 des Führungslagers 15 drehfest mit dem Grundkörper 1 verbunden. Die Nut 48 erstreckt sich über die gesamte axiale Länge des Innenringes 21. Der Mitnehmer 47 ist wesentlich kürzer und hat im Ausführungsbeispiel gleiche axiale Länge wie die starren Stützelemente 17. Selbstverständlich kann der Mitnehmer 47 auch eine andere Länge als die Stützelemente 17 haben. Der Mitnehmer 47 liegt, in Achsrichtung des Grundkörpers 1 gesehen, in Höhe der Schneiden 6 bis 9.

Die Stellstange 25 hat eine zentrische Druckluftbohrung 49, die im Bereich des Flächenabschnittes 44 der Steuerfläche 43 ausmündet. Im Bereich der Steuerfläche 43 wird ein Druckluftraum 50 gebildet, in den eine Druckluftbohrung 51 im Stützelement 17' mündet. Sie verläuft längs im Stützelement 17' und mündet in seine Außenseite 26. Über die beschriebene Druckluftzuführung 49, 50, 51 kann Druckluft zum Sauberblasen der Führungsfläche 26 zugeführt werden.

Beim Einfahren des Werkzeuges in die Bohrungen 6 bis 9 des Werkstückes 10 ist die Stellstange 25 in bezug auf den Grundkörper 1 axial eingefahren (Fig. 1). Dadurch kommt die Kugel 42 des Stützelementes 17' am radial innen liegenden Flächenabschnitt 44 der Steuerfläche 43 unter der Kraft der Rückholfeder 35 zur Anlage. Die Querbohrung 28 zur Aufnahme der Achse 27 hat ovalen Querschnitt (Fig. 7), der so gewählt ist, daß die Achse 27 in der axial zurückgeschobenen Lage des Stützelementes 17' an dem in Fig. 7 oberen Ende der Querbohrung 28 anliegt. Die Führungsfläche 26 des Stützelementes 17' liegt dann in der Umfangsfläche des Grundkörpers 1, so daß das Werkzeug radial zur Achse der Bohrungen 6 bis 9 versetzt in das Werkstück 10 eingefahren werden kann (Fig. 1). Sobald die Stellung gemäß Fig. 1 erreicht ist, in der sich die Schneiden 2 bis 5 unmittelbar vor den zu bearbeitenden Bohrungen 6 bis 9 befinden, wird die Stellstange 25 ausgefahren. Hierfür ist eine maschinenseitige Betätigung der Stellstange 25 über eine zusätzliche Achse (bei gleichzeitiger Paßlagerbearbeitung) erforderlich. Die Steuerfläche 43 verschiebt sich hierbei relativ zum Stützelement 17 derart, daß die Kugel 42 über den schrägen Flächenabschnitt 45 zum geraden, radial außen liegenden Flächenabschnitt 46 gelangt (Fig. 6 und 7). Dadurch wird das Stützelement 17' gegen die Kraft der Rückholfeder 35 radial nach außen verstellt. Die Achse 27 kommt hierbei an dem radial außen liegenden Ende der ovalen Querbohrung 28 zur Anlage (Fig. 7). Das Stützelement 17' ist somit zwischen der Stellstange 25 und dem als Anschlag wirkenden Ende der Querbohrung 28 vorgespannt. Nunmehr können die Bohrungen 6 bis 9 durch das Werkzeug gleichzeitig mit den Schneiden 2 bis 5 bearbeitet werden.

Anstelle der maschinenseitigen Betätigung der Stellstange 25 über die zusätzliche Achse ist es auch möglich, die Stellstange 25 durch Öldruck gegen einen Anschlag zu verfahren, um das Stützelement 17' radial zu verstellen.

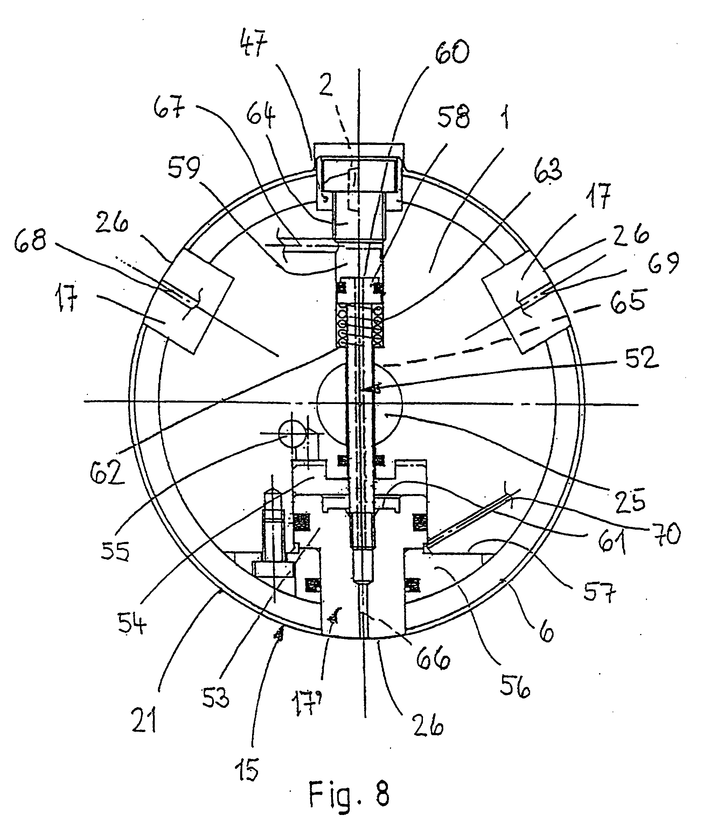

Fig. 8 zeigt eine weitere Möglichkeit, das Stützelement 17' radial zu verstellen. Auch für diese Ausführungsform gilt, daß das andere radial verstellbare Stützelement 18' in gleicher Weise verschoben wird. Während bei der vorigen Ausführungsform die Stellstange 25 zwei Steuerflächen 43 für die Stützelemente 17' und 18' aufweist, erfolgt bei der vorliegenden Ausführungsform die Radialverstellung der Stützelemente 17', 18' mittels Druckmittel. Die zentrisch im Grundkörper 1 angeordnete Stellstange 25 weist ein in Achsrichtung sich erstreckendes Langloch auf, das von einem Rückholbolzen 52 radial durchsetzt wird. Die Stellstange 25 ist für die Paßlagerbearbeitung vorgesehen. Der Rückholbolzen 52, der radial verschiebbar im Grundkörper 1 untergebracht ist, ist in das Stützelement 17' geschraubt. Sein radial innen liegendes Ende ist als Kolben 53 ausgebildet, der einen im Grundkörper 1 vorgesehenen Druckraum 54 begrenzt. Der Kolben 53 ist abgedichtet im Druckraum 54 verschiebbar, in den eine Druckmittelzuführung 55 mündet. Sie verläuft axial im Grundkörper 1 und ist maschinenseitig an eine entsprechende Druckmittelquelle angeschlossen. In der in Fig. 8 dargestellten Lage liegt der Kolben 53 an einem Anschlag 56 an, der in eine außenseitige Vertiefung des Grundkörpers 1 geschraubt ist. Die Außenseite des Anschlages 56 ist so gestaltet, daß sie in der Hüllfläche des Grundkörpers 1 liegt.

Das vom Stützelement 17' abgewandte Ende des Rückhoibolzens 52 ist als Kolben 58 ausgebildet, der abgedichtet in einem Druckraum 59 verschiebbar geführt ist. Die vom Druckmedium beaufschlagte Fläche 60 des Kolbens 58 ist kleiner als die vom Druckmedium beaufschlagte Fläche 61 des Kolbens 53. Zwischen dem Kolben 58 und einem Boden 62 des Druckraumes 59 ist wenigstens eine als Druckfeder ausgebildete Rückholfeder 63 untergebracht, die den Rückholbolzen 52 und damit das Stützelement 17' radial nach innen belastet.

Der Druckraum 59 ist radial nach außen durch eine Stiftschraube 64 geschlossen.

Im Bereich zwischen den beiden starren Stützelementen 17 sind die Schneide 2 und der Mitnehmer 47 für das Führungslager 15 vorgesehen. Sie sind gleich ausgebildet wie beim vorigen Ausführungsbeispiel. Der Rückholbolzen 52 ist über seine gesamte Länge von einer Druckluftbohrung 65 axial durchsetzt, die mit einer das Stützelement 17' radial durchsetzenden Druckluftbohrung 66 strömungsverbunden ist. In den Druckraum 59 mündet eine Druckluftbohrung 67, die an eine Druckluftquelle der Maschine angeschlossen ist. Vorteilhaft münden in die als Führungsflächen dienenden Außenseiten 26 der starren Stützelemente 17 weitere Druckluftbohrungen 68 und 69. Somit kann beim Anlegen der Stützelemente 17, 17' an den Innenring 21 des Führungslagers 15 Luft zum Sauberblasen der Führungsflächen 26 der Stützelemente 17, 17' zugeführt werden.

Damit das Stützelement 17' aus seiner radial nach außen verstellten Lage gemäß Fig. 8 wieder radial nach innen verstellt werden kann, mündet eine weitere Druckmittelbohrung 70 auf die der Kolbenfläche 61 gegenüberliegende Seite des Kolbens 53.

In der Ausgangslage ist das Stützelement 17' radial nach innen verstellt. Hierzu wird Druckmittel, vorzugsweise Hydraulikmedium, über die Druckmittelbohrung 70 zugeführt. Dadurch wird der Kolben 53 und damit das Stützelement 17' radial nach innen verstellt. Diese Radialbewegung wird noch durch die Rückholfeder 63 unterstützt, so daß das Stützelement 17' zuverlässig radial nach innen bewegt wird, bis die Fläche 61 am Grundkörper 1 zur Anlage kommt. Das im Druckraum 54 befindliche Hydraulikmedium wird hierbei in bekannter Weise verdrängt. In dieser zurückgezogenen Lage liegt die Außenseite 26 des Stützelementes 17' in der Mantelfläche des Grundkörpers 1. Das Werkzeug kann in dieser Stellung des Stützelementes 17' in der beschriebenen Weise in das Werkstück 10 in exzentrischer Lage eingeführt werden (Fig. 1). Sobald die Lage gemäß Fig. 3 erreicht ist, wird die Einfahrbewegung des Werkzeuges gestoppt und über die Druckmittelzuführung 55 das Druckmedium zugeführt. Dadurch wird das Stützelement 17' über den Kolben 53 gegen die Kraft der Rückholfeder 63 radial nach außen verschoben, bis der Kolben 53 am Anschlag 56 zur Anlage kommt (Fig. 8). Beim Ausfahren des Stützelementes 17' wird außerdem Druckluft zum Sauberblasen der Führungsflächen 26 zugeführt, so daß sich die Stützelemente 17, 17' einwandfrei am Innenring 21 des Führungslagers 15 anlegen können. Das Hydraulikmedium wird während der Bearbeitung des Werkzeuges 10 unter Druck gehalten, so daß das Stützelement 17' seine radial ausgefahrene Lage beibehält. Unter axialem Vorschub des Werkzeuges werden nunmehr die Bohrungen 6 bis 9 im Werkstück 10 gleichzeitig in der beschriebenen Weise bearbeitet.

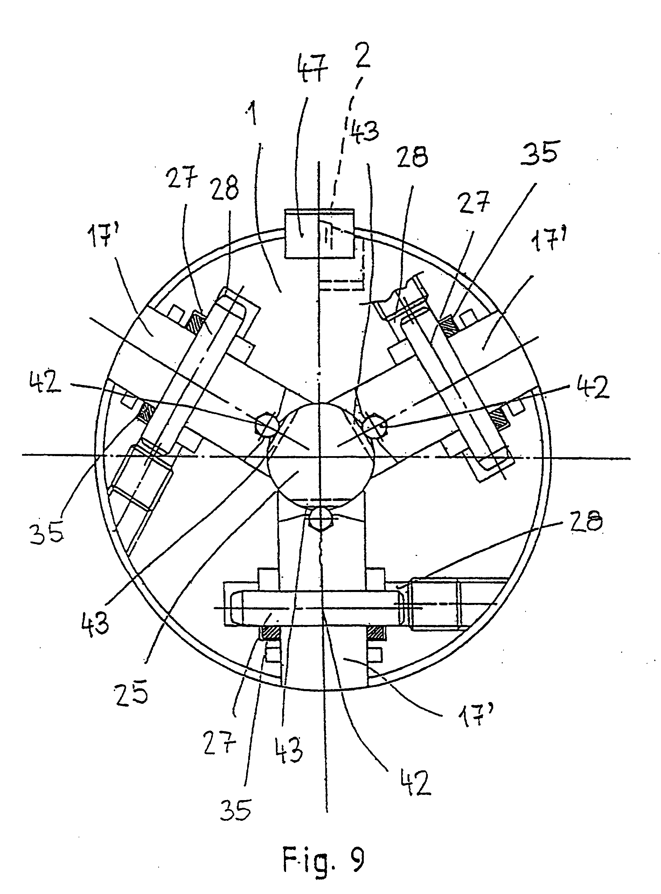

Das Ausführungsbeispiel nach Fig. 9 entspricht dem Ausführungsbeispiel nach den Fig. 1 bis 8. Der einzige Unterschied besteht darin, daß sämtliche Stützelemente 17' radial verstellbar im Grundkörper 1 gelagert sind. Die drei Stützelemente 17' sind in diesem Falle gleich ausgebildet und werden von jeweils einer Achse 27 durchsetzt, die mit ihren Enden in Querbohrungen 28 des Grundkörpers 1 gelagert sind. Die Stellstange 25 weist dementsprechend drei Steuerflächen 43 auf, die gleich ausgebildet sind wie die Steuerfläche 43 gemäß den Fig. 6 und 7. Die Stützelemente 17' liegen jeweils mit einer Kugel 42 an den Steuerflächen 43 an, wie dies anhand der Fig. 6 und 7 im einzelnen erläutert worden ist. Die Querbohrungen 28 haben jeweils ovalen Querschnitt, so daß die Achsen 27 in der radial inneren und in der radial äußeren Stellung der Stützelemente 17' an dem jeweiligen Ende der Querbohrungen 28 anliegen. Jedes Stützelement 17' ist durch jeweils eine Rückholfeder 35 radial nach innen belastet, wie anhand der Fig. 6 und 7 erläutert worden ist.

Beim Verschieben der Stellstange 25 werden alle Stützelemente 17' in der beschriebenen Weise radial verstellt. Diese Ausführungsform wird dann eingesetzt, wenn wegen eines nur geringen exzentrischen Versatzes des Grundkörpers 1 beim Einfahren in das Werkstück 10 die ansonsten vorgesehenen festen Stützelemente mit dem jeweiligen Führungslager 15, 16 bzw. mit dem Werkstück 10 kollidieren würden. Zum Einfahren des Werkzeuges in das Werkstück 10 werden somit sämtliche Stützelemente 17' radial nach innen verstellt, so daß das Werkzeug auch für Werkstücke eingesetzt werden kann, deren Bohrungen einen Durchmesser haben, der nur wenig größer ist als der Außendurchmesser des Grundkörpers 1. Auch dann läßt sich das Werkzeug radial exzentrisch versetzt durch die zu bearbeitenden Bohrungen 6 bis 9 des Werkstückes 10 einfahren.

Die anderen Stützelemente 18 des Werkzeuges sind in diesem Falle gleich ausgebildet wie die Stützelemente 17', d.h. sie sind ebenfalls mittels der Stellstange 25 radial verstellbar. Für die radial verstellbaren Stützelemente 18 ist die Stellstange 25 mit drei entsprechenden Steuerflächen versehen.

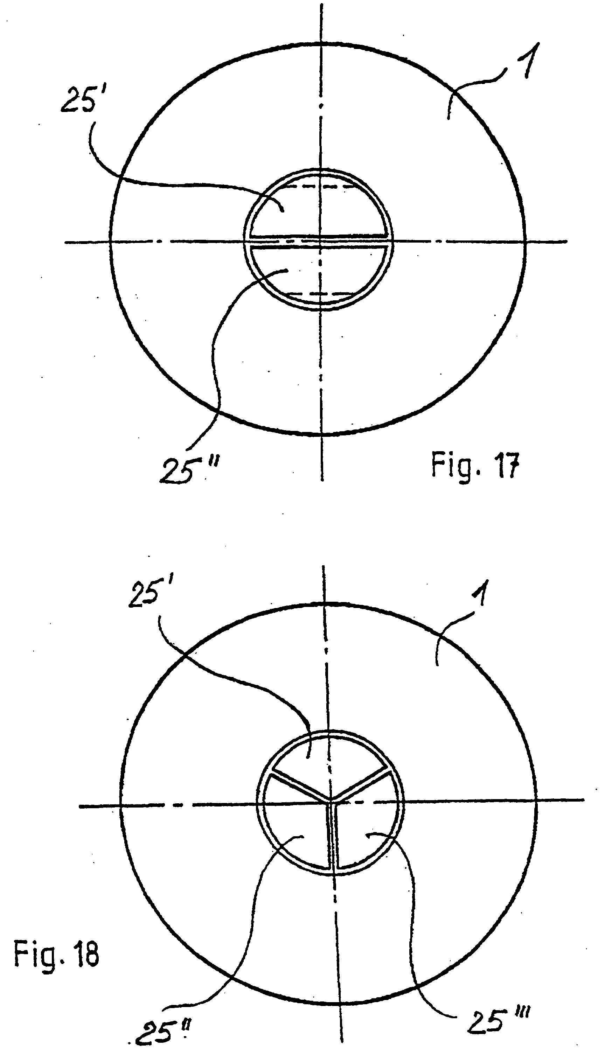

Fig. 17 zeigt eine Ausführungsform, bei der im Grundkörper 1 zwei Stellstangen 25', 25'' axial verschiebbar gelagert sind. Sie haben jeweils halbkreisförmigen Querschnitt und lassen sich unabhängig voneinander betätigen.

Beim Ausführungsbeispiel nach Fig. 18 sind im Grundkörper 1 drei unabhängig voneinander axial verstellbare Stellstangen 25', 25'', 25"' untergebracht, die jeweils sektorförmigen Querschnitt haben.

Die unabhängig voneinander verstellbaren Stellstangen 25', 25", 25"' (Fig. 17 und 18) können für unterschiedliche Funktionen eingesetzt werden, beispielsweise zur Aussteuerung der Stützelemente 17', 18', zur radialen Nachstellung einer oder mehrerer Schneiden 2 bis 5 oder zur Betätigung eines Meßelementes.

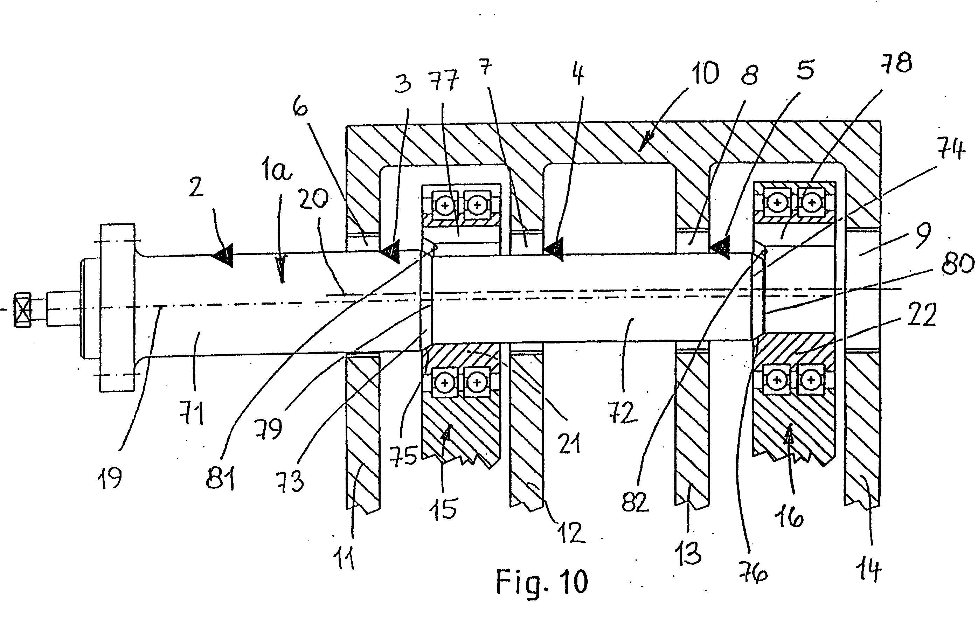

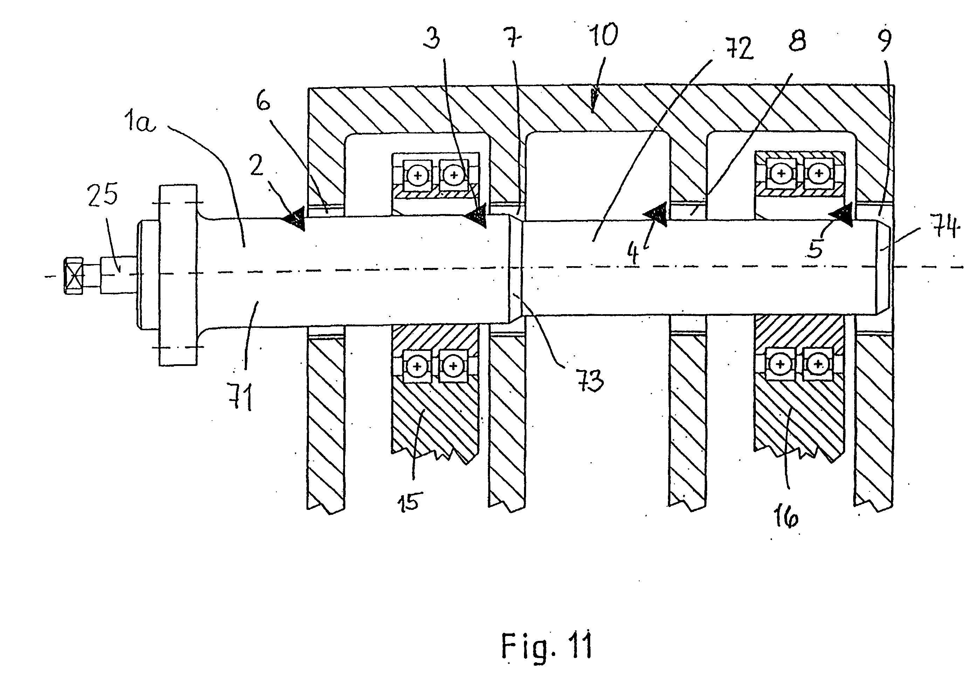

Die Fig. 10 und 11 zeigen ein Werkzeug, dessen Grundkörper 1a aus zwei im Durchmesser unterschiedlich großen Abschnitten 71 und 72 besteht. Der in Vorschubrichtung des Werkzeuges vordere Grundkörperabschnitt 72 hat kleineren Durchmesser als der Grundkörperabschnitt 71. Der Übergang zwischen den beiden Grundkörperabschnitten 71 und 72 ist als Kegelstumpf 73 ausgebildet. Auch das freie Ende 74 des Grundkörpers 1a hat die Form eines Kegelstumpfes 74.

Die Führungslager 15 und 16 befinden sich wie bei den zuvor beschriebenen Ausführungsbeispielen zwischen den Stegen 11, 12 und 13, 14 des Werkstückes 10. Der Innenring 21, 22 der Führungslager 15, 16 ist an dem in Einschubrichtung des Werkzeuges rückwärtigen Ende mit einer den Kegelstümpfen 73, 74 entsprechenden kegelförmigen Fase 75, 76 versehen.

Der Grundkörper 1a ist mit den Schneiden 2 bis 5 zur Bearbeitung der Bohrungen 6 bis 9 versehen. Im Gegensatz zu den vorigen Ausführungsbeispielen ist der Innendurchmesser der Führungslager 15, 16 kleiner als der Durchmesser der Werkstückbohrungen 6 bis 9. Damit die Schneiden 2 bis 5 beim Einfahren des Werkzeuges in das Werkstück 10 nicht mit dem Innenring 21, 22 der Führungslager 15, 16 kollidieren, sind die Innenringe 21, 22 jeweils mit einer axialen Nut 77, 78 versehen, die sich über die axiale Breite des Innenringes erstreckt und die radial so tief sind, daß die Schneiden des Werkzeuges berührungsfrei durch sie hindurch bewegt werden können.

Aufgrund der Kegelstümpfe 73, 74 werden zwei umlaufende Kanten 79 und 80 gebildet. In gleicher Weise sind die Fasen 75, 76 am schmaleren Ende mit jeweils einer umlaufenden Kante 81 und 82 versehen. Der Abstand zwischen den führungslagerseitigen Kanten 81 und 82 entspricht dem Abstand zwischen den grundkörperseitigen Kanten 79 und 80. Dadurch wird erreicht, daß sich der Grundkörper 1a beim Einfahren in das Werkstück 10 selbsttätig gegenüber den zu bearbeitenden Werkstückbohrungen 6 bis 9 zentriert.

Wie sich aus Fig. 10 ergibt, wird das Werkzeug so in das Werkstück 10 eingeführt, daß seine Achse 19 exzentrisch zur Achse 20 der Bohrungen 6 bis 9 liegt. Das Werkzeug wird vor dem Einfahren in das Werkstück 10 so ausgerichtet, daß die in Achsrichtung mit Abstand hintereinander liegenden Schneiden 2 bis 5 in Höhe der Nuten 77, 78 der Führungslager 15, 16 liegen. Dadurch gelangen die Schneiden beim Einführen in das Werkstück 10 in diese Nuten, so daß sie nicht beschädigt werden können. Das Werkzeug wird so weit eingeführt, bis der Kegelstumpf 73 am Übergang vom dünneren zum dickeren Grundkörperabschnitt 71, 72 an der Fase 75 des Führungslagers 15 anliegt. Da der Abstand zwischen den Kanten 79 und 80 des Grundkörpers 1a dem Abstand der Kanten 81, 82 der Führungslager 15, 16 entspricht, liegt dann auch der Kegelstumpf 74 des Grundkörpers 1a an der Fase 76 des Führungslagers 16 an. Der dickere Grundkörperabschnitt 71 hat in dieser Lage Abstand von der Wandung der Werkstückbohrung 6.

Wird das Werkzeug aus der Stellung gemäß Fig. 10 weiter in das Werkstück 10 eingeführt, gelangt der dickere Grundkörperabschnitt 71 auf das Führungslager 15 (Fig. 11). Es ist so angeordnet, daß es, in Achsrichtung der Werkstückbohrungen 6 bis 9 gesehen, mit dem unteren Bereich in die Werkstückbohrungen ragt. Darum wird das Werkzeug beim weiteren Einschieben zwangsläufig angehoben und dadurch selbsttätig in den Werkstückbohrungen zentriert. Der Grundkörperabschnitt 71 liegt dann auf dem Führungslager 15 auf (Fig. 11). Das andere Führungslager 16 ist so angeordnet, daß es weiter radial in die Werkstückbohrungen 6 bis 9 ragt, in deren Achsrichtung gesehen, als das Führungslager 15. Dieser Überstand ist so gewählt, daß der Grundkörper 1a mit seinem dünneren Grundkörperabschnitt 72 auf dem Führungslager 16 aufliegt. In dieser Lage haben die Grundkörperabschnitte 71, 72 Abstand von den Wandungen der Werkstückbohrungen 6 bis 9.

Damit die erforderliche exzentrische Bewegung des Werkzeuges vorgenommen werden kann, ist die (nicht dargestellte) Antriebsspindel mit einem Pendelfutter versehen, das die erforderliche Verlagerung des Werkzeuges ermöglicht. Das Werkzeug wird so weit in das Werkstück 10 eingefahren, bis die Schneiden 2 bis 5 unmittelbar vor den zu bearbeitenden Werkstückbohrungen 6 bis 9 liegen (Fig. 11). Dann wird der Drehantrieb der Spindel eingeschaltet und das rotierende Werkzeug aus der Stellung gemäß Fig. 11 weiter in das Werkzeug 10 geschoben. Hierbei bearbeiten die Schneiden 2 bis 5 gleichzeitig die Bohrungen 6 bis 9. Die Grundkörperabschnitte 71, 72 sind so lang, daß sie während der Bearbeitung der Bohrungen 6 bis 9 auf den Führungslagern 15, 16 aufliegen und dadurch die zentrische Ausrichtung des Werkzeuges in bezug auf die Werkstückbohrungen 6 bis 9 gewährleisten.

Eine solche Werkzeugausbildung wird beispielsweise dann angewendet, wenn bei der Feinbearbeitung insbesondere beim Honen, ein Umspannen zugelassen wird. Bei den vorigen Ausführungsbeispielen mit den radial verstellbaren Stützelementen 17', 18' ist ein Umspannen beim Honen nicht erforderlich.

Die im Grundkörper 1a zentrisch vorgesehene Stellstange 25 dient, wie es an sich bekannt ist, zur Bearbeitung kreisringförmiger Anschlagflächen an dem Werkstückstegen 11 bis 14 des Paßlagers.

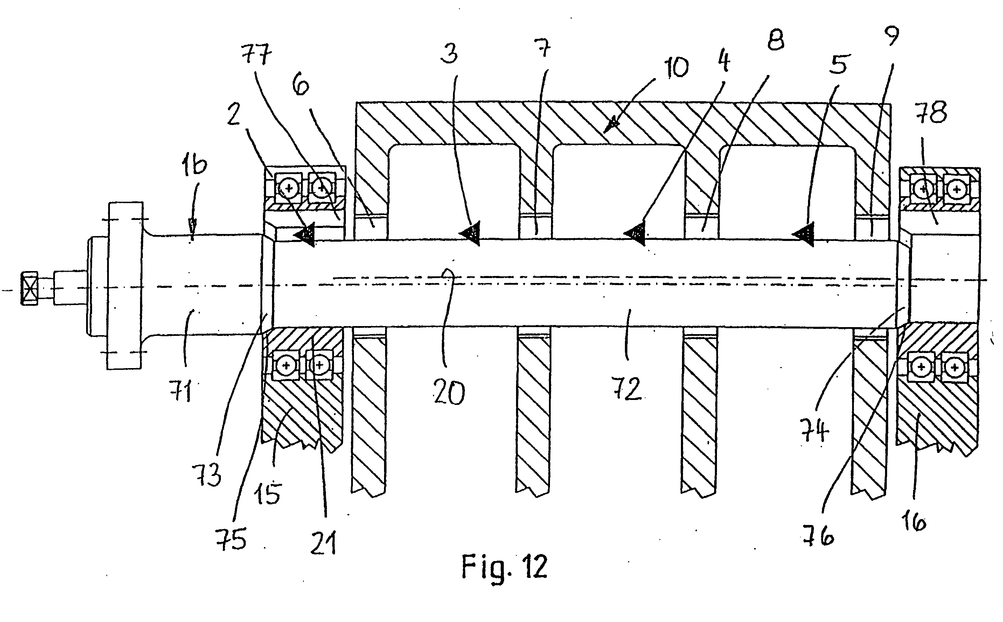

Das Ausführungsbeispiel nach den Fig. 12 und 13 unterscheidet sich vom vorigen Ausführungsbeispiel lediglich dadurch, daß die beiden Führungslager 15 und 16 beiderseits des zu bearbeitenden Werkstückes 10 angeordnet sind. Da sie größeren Abstand als bei der vorigen Ausführungsform voneinander haben, sind die Abschnitte 71, 72 des Grundkörpers 1b im Vergleich zur vorigen Ausführungsform unterschiedlich lang. Im übrigen wird das Werkzeug in gleicher Weise exzentrisch in das Werkstück 10 eingefahren wie beim vorigen Ausführungsbeispiel. Wie sich aus Fig. 12 ergibt, wird das Werkzeug so weit in das Werkstück 10 eingefahren, bis die beiden Kegelstümpfe 73, 74 des Grundkörpers 1b an den kegelstumpfförmigen Fasen 75 und 76 der Führungslager 15, 16 anliegen. Der dünnere Grundkörperabschnitt 72 liegt hierbei auf dem Innenring 21 des Führungslagers 15 auf. Wie beim vorigen Ausführungsbeispiel haben die beiden Führungslager 15, 16 einen Innendurchmesser, der größer ist als der Durchmesser des dünneren Grundkörperabschnittes 72. Da die beiden Führungslager 15, 16 außerhalb des Werkstückes 10 angeordnet sind, ist der dünnere Grundkörperabschnitt 72 so lang, daß er sämtliche zu bearbeitende Werkstückbohrungen 6 bis 9 durchsetzt. Beim Einfahren bis in die Stellung gemäß Fig. 12 wird der Grundkörper 1b mit dem Grundkörperabschnitt 72 auf dem Führungslager 15 abgestützt. Es ist entsprechend dem vorigen Ausführungsbeispiel in bezug auf die Werkstückbohrungen 6 bis 9 so angeordnet, daß der Grundkörperabschnitt 72 Abstand von den Wandungen der Bohrungen 6 bis 9 hat. Beim Einfahren ist der Grundkörper 1b wiederum so in Drehrichtung ausgerichtet, daß die Schneiden 2 bis 5 in die Nuten 77, 78 der Innenringe 21, 22 der Führungslager 15, 16 gelangen. Aufgrund der exzentrischen Lage des Grundkörpers 1b zur Bohrungsachse 20 kommen die Schneiden 2 bis 5 beim Einfahren in das Werkstück 10 nicht mit der Wandung der Bohrungen in Berührung.

Ist die Lage gemäß Fig. 12 erreicht, in der die Kegelstümpfe 73, 74 des Grundkörpers 1b an den Fasen 75, 76 der Führungslager 15, 16 anliegen, wird beim weiteren Einfahren das Werkzeug selbsttätig in den Werkstückbohrungen 6 bis 9 zentriert. Über die Kegelstümpfe 73 , 74 wird der Grundkörper 1b entsprechend der vorigen Ausführungsform angehoben. Der Grundkörper 1b wird dann, wie anhand der vorigen Ausführungsform beschrieben, mit seinen Grundkörperabschnitten 71, 72 in den Führungslagern 15, 16 aufgenommen. Ist die Stellung gemäß Fig. 13 erreicht, in der sich die Schneiden 2 bis 5 unmittelbar vor den Werkstückbohrungen 6 bis 9 befinden, wird der Drehantrieb der Spindel eingeschaltet und nunmehr das drehende Werkzeug in das Werkstück 10 eingefahren. Hierbei bearbeiten die Schneiden 2 bis 5 die Werkstückbohrungen 6 bis 9.

Die als Hubelemente dienenden Kegelstümpfe 73, 74 können Bestandteil einer am Grundkörper wälz- oder gleitgelagerten, axial nicht verschiebbaren Rotationshülse sein, die im jeweiligen Führungslager 15, 16 abgestützt ist.

Bei sämtlichen beschriebenen Ausführungsbeispielen erfolgt der Rückzug des Werkzeuges aus dem Werkstück 10 in umgekehrter Reihenfolge.

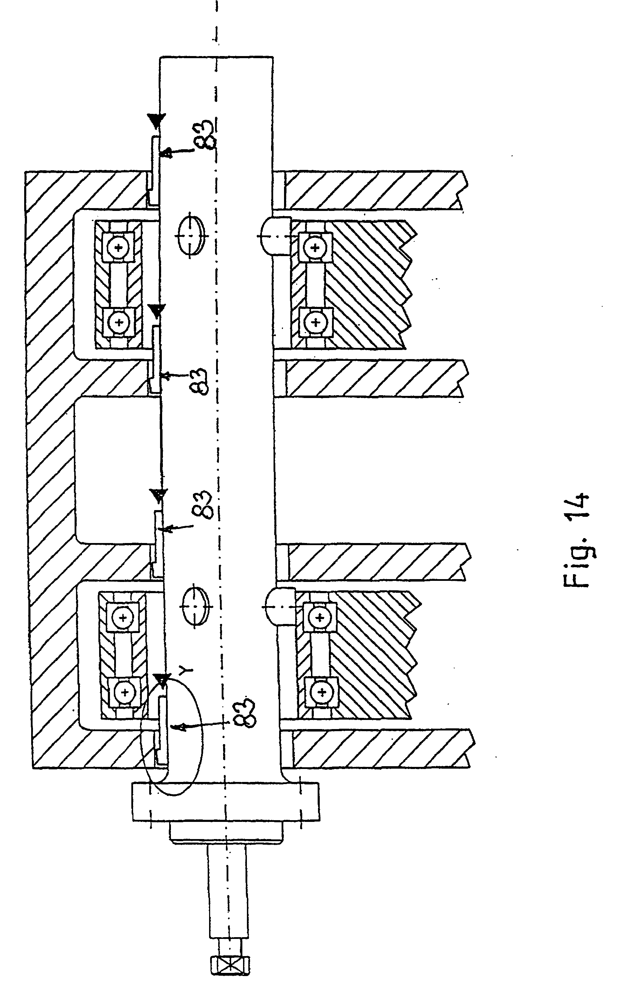

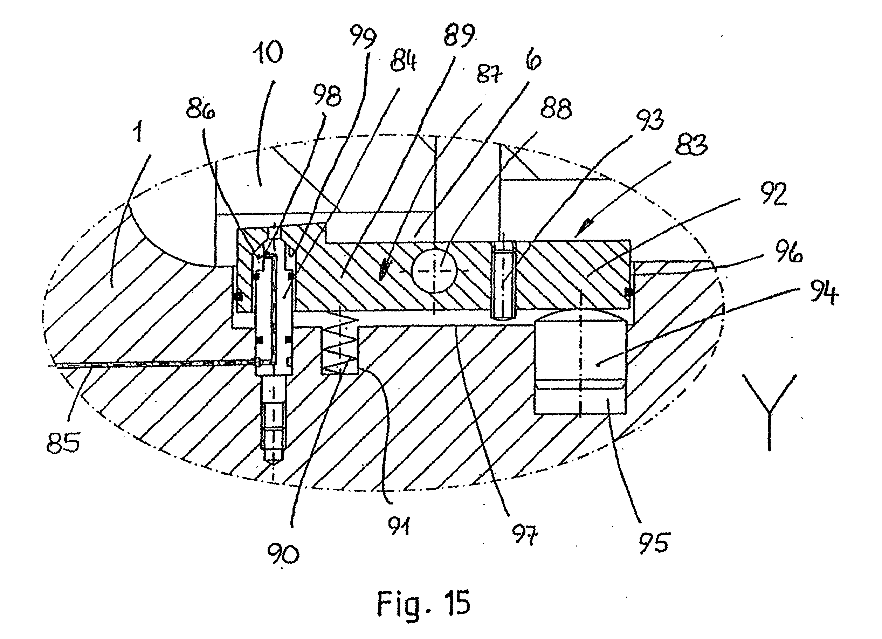

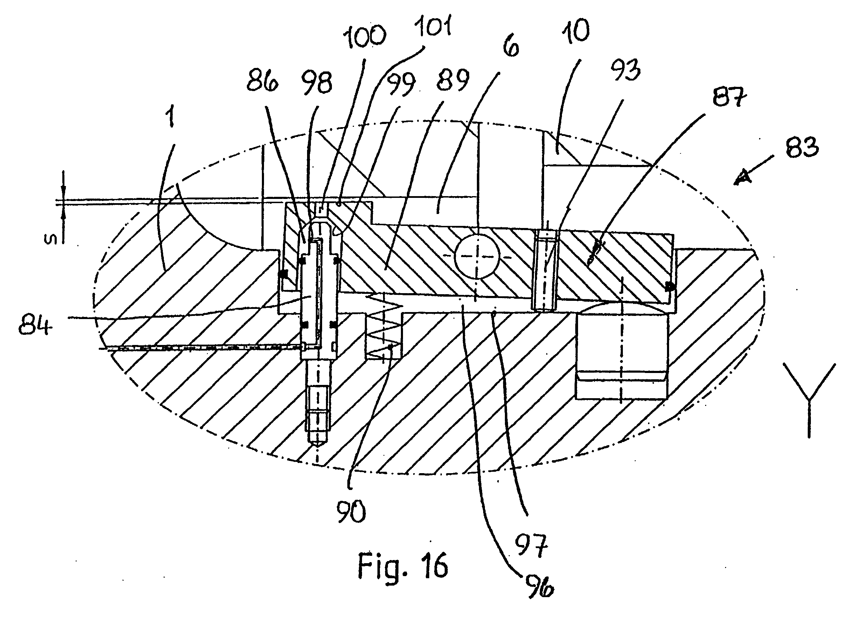

Die Fig. 14 bis 16 zeigen ein Werkzeug, das mit Meßeinrichtungen 83 versehen ist, mit denen einfach und dennoch sehr genau der Durchmesser der Bohrungen 6 bis 9 unmittelbar nach der Bearbeitung gemessen werden kann. Das Werkzeug hat so viele Meßeinrichtungen, wie Bohrungen im Werkstück 10 bearbeitet werden. Die Meßeinrichtungen 83 sind gleich ausgebildet und werden anhand der Fig. 15 und 16 im einzelnen erläutert.

Die Meßeinrichtung 83 arbeitet nach dem Druckluftprinzip und ist am Grundkörper 1 des Werkzeuges angeordnet. Während der spanabhebenden Bearbeitung ist die Meßeinrichtung 83 abgekoppelt und, wie Fig. 15 zeigt, so angeordnet, daß eine Meßdüse 84 der Meßeinrichtung 83 nicht mit der Bohrungswandung des Werkstückes 10 in Berührung kommen kann. Die Meßdüse 84 ist feststehend am Grundkörper 1 des Werkzeuges angeordnet. In sie mündet eine im Grundkörper 1 vorgesehene Druckluftleitung 85, die an eine Druckluftquelle angeschlossen ist. Die Meßdüse 84 ragt in einen Aufnahmeraum 86 einer zweiarmigen Wippe 87. Sie ist um eine senkrecht zur Achse des Werkzeuges liegende, nahe dem Umfang des Grundkörpers 1 vorgesehene Achse 88 schwenkbar. An dem den Aufnahmeraum 86 aufweisenden Arm 89 stützt sich eine Druckfeder 90 ab, die in einer Vertiefung 91 in der Außenseite des Grundkörpers 1 vorgesehen ist. Der andere Wippenarm 92 weist eine Stellschraube 93 auf, die als Gewindestift ausgebildet ist und mit welcher der Schwenkweg der Wippe 87 für den Meßvorgang eingestellt werden kann. Der Wippenarm 92 liegt im Bereich seines freien Endes auf einem Fliehkraftelement 94 auf, das in einer Vertiefung 95 in der Außenseite des Grundkörpers 1 radial verschiebbar gelagert ist. Die Wippe 87 ragt teilweise in eine an der Außenseite des Grundkörpers 1 vorgesehene Vertiefung 96, in deren Boden 97 die Vertiefungen 91 und 95 münden.

Während der Bearbeitung des Werkstückes 10 bzw. seiner Bohrungen 6 bis 9 dreht das Werkzeug mit der Drehzahl n_{Bearbeitung}. Das Fliehkraftelement 94 ist so ausgelegt und am Grundkörper 1 angeordnet, daß es sich unter Fliehkraft radial nach außen bewegt und hierbei die Wippe 87 gegen die Kraft der Druckfeder 90 schwenkt (Fig. 15). Eine Austrittsöffnung 98 für die Druckluft liegt seitlich an der Meßdüse 84. Während der Werkstückbearbeitung liegt ein Boden 99 des Aufnahmeraumes 86 über den Umfang der Meßdüse 84 an deren Stirnbereich an. Dadurch ist die Düsenaustrittsöffnung 98 geschlossen, so daß während der Werkstückbearbeitung anfallender Schmutz nicht in die Düsen 98 gelangt und diese verstopft. Während der Werkstückbearbeitung findet eine Messung nicht statt. Die Wippe 87 liegt mit ausreichendem Abstand von der Wandung der Bohrungen 6 bis 9, so daß eine Beschädigung durch die Wippe vermieden wird.

Nach der Werkstückbearbeitung wird die Antriebsspindel und damit das Werkzeug stillgesetzt. Da nunmehr auf das Fliehkraftelement 94 keine Fliehkraft mehr wirkt, wird die Wippe 87 unter der Kraft der Druckfeder 90 in die in Fig. 16 dargestellte Lage geschwenkt. Der Schwenkwinkel wird durch den Überstand der Stellschraube 93 über die Wippe 87 bestimmt. Die Stellschraube 93 kommt am Boden 97 der Vertiefung 96 zur Anlage und beendet damit die Schwenkbewegung der Wippe 87. Aufgrund der Schwenkbewegung der Wippe 87 hebt der Boden 99 des Aufnahmeraumes 86 von der Meßdüse 84 ab. Die Druckluft kann somit aus der Austrittsöffnung 98 der Meßdüse 84 zu einer gegen die Wandung der Bohrung 6 bis 9 gerichteten Austrittsöffnung 100 im Wippenarm 89 strömen. Im Bereich der Meßdüse 84 ist der Wippenarm 89 verdickt ausgebildet. Die gegen die Wandung der Bohrung 6 bis 9 gerichtete Stirnseite 101 des Wippenarms 89 bildet eine Meßfläche, die der Bohrungswandung mit einem Meßspalt s (Fig. 16) gegenüberliegt. Die Größe dieses Meßspaltes s kann mit der Stellschraube 93 feinfühlig und stufenlos eingestellt werden. Somit wird die fertige Bohrung durch die Druckluft gemessen. Die Auswertung des Meßergebnisses ist an sich bekannt und wird darum nicht näher erläutert.

Die Druckluft wird maschinenseitig nach der Bearbeitung des Werkstückes 10 am stehenden Werkzeug in an sich bekannter Weise angedockt. Zur Messung der fertigen Bohrung reicht eine Meßdüse 84 aus. Es ist selbstverständlich möglich, über den Umfang des Werkzeuges mehrere Meßdüsen 84 pro Bohrung 6 bis 9 vorzusehen, die in gleicher Weise ausgebildet sind, wie es anhand der Fig. 14 bis 16 erläutert worden ist. Die Meßdüsen 84 können sowohl am Umfang verteilt als auch axial hintereinander angeordnet sein, bezogen auf jeweils eine Bohrung.

Die Düsen können auch als einfache Austrittsöffnungen auf einem genauen Durchmesser des Werkzeuges oder auf einer durch die Stellstange 25 gesteuerten Wippe vorgesehen sein. Die Steuerung der Wippe erfolgt über eine schräge Fläche an der Stellstange 25, ähnlich wie die Steuerung der Stützelemente. Schließlich ist es möglich, die Messung der fertigen Bohrung 6 bis 9 nicht nur über den Luftspalt s vorzunehmen, sondern auch über einen unmittelbaren Kontakt zwischen der Meßeinrichtung 83 und dem Werkstück 10 vorzunehmen. Die Meßeinrichtung 83 ist in diesem Fall selbstverständlich so ausgebildet, daß sie die Bohrungswandung nicht beschädigt.

Die fliehkraftgesteuerte Wippe 87 hat mehrere Funktionen. Während der Bearbeitung des Werkstückes 10 verschließt sie die Meßdüse 84, so daß Schmutz, Kühlmittel und dergleichen nicht an die Meßdüse gelangen kann. Darüber hinaus hebt sie bei Stillstand des Werkzeuges selbsttätig von der Meßdüse 84 ab, so daß unmittelbar anschließend der Meßvorgang mittels der Druckluft durchgeführt werden kann. Die Meßfläche 101 kommt beispielsweise bei einem Schneidenbruch mit der Bohrungswandung zwar in Berührung, wird jedoch nicht beschädigt, da das Werkzeug während des Meßvorganges stillsteht.

Die Luftmeßdüsen 84 arbeiten so genau, daß eine Durchmesser-Messung im µ-Bereich möglich ist. Da die Luftmeßdüsen 84 in das Werkzeug integriert sind, ist ein separater Meßdorn nicht erforderlich, so daß die Nebenzeiten beim Einsatz des Werkzeuges verkürzt werden. Außerdem ergibt sich eine wesentlich genauere Messung als mit einem separaten Meßdorn, weil die Luftmeßdüsen 84 direkt auf dem Bearbeitungswerkzeug angeordnet sind und darum Positionierfehler vermieden werden.

Die beschriebenen Meßeinrichtungen 83 können bei sämtlichen der zuvor beschriebenen Ausführungsformen von Werkzeugen vorgesehen sein.

Die Meßdüse 84 kann auch in einer Wippe vorgesehen sein, die mechanisch durch die Stellstange 25 gesteuert wird. Durch Verschieben der Stellstange 25 wird die Wippe in die jeweilige Lage geschwenkt. Die Messung erfolgt dann in gleicher Weise, wie anhand der Fig. 14 bis 16 erläutert worden ist.

Die Verstellung des Werkzeuges aus der exzentrischen in die zentrische Lage kann auch durch eine entsprechende Bewegung der Maschinenachse erfolgen. Die Hub- bzw. Stützelemente 17, 18, 17', 18', 73, 74 halten dann das Werkzeug während der Bearbeitung in der zentrischen Lage. Auch in diesem Fall wird das Werkstück 10 nicht verstellt, sondern lediglich das Werkzeug.

## Patentansprüche

1. Werkzeug mit einem Grundkörper, der Schneiden zur Bearbeitung von Bohrungen in einem Werkstück trägt, die koaxial zueinander angeordnet sind, **dadurch gekennzeichnet, daß** der Grundkörper (1, 1a, 1b) wenigstens ein integriertes Hubelement (17', 18', 73, 74) aufweist, mit dem der Grundkörper (1, 1a, 1b) aus einer in bezug auf die Achse (20) der Werkstückbohrungen (6 bis 9) exzentrischen Einführlage in eine zentrische Bearbeitungslage bewegbar ist, in der die Achse (19) des Werkzeuges mit der Achse (20) der Werkstückbohrungen (6 bis 9) zusammenfällt.

2. Werkzeug nach Anspruch 1, **dadurch gekennzeichnet, daß** das Hubelement (17', 18') radial verstellbar im Grundkörper (1) gelagert ist.

3. Werkzeug nach Anspruch 2, **dadurch gekennzeichnet, daß** das Hubelement (17', 18') mechanisch verstellbar ist.

4. Werkzeug nach Anspruch 2, **dadurch gekennzeichnet, daß** das Hubelement (17', 18') durch Druckmedium verstellbar ist.

5. Werkzeug nach einem der Ansprüche 2 bis 4, **dadurch gekennzeichnet, daß** das Hubelement (17', 18') gegen eine Gegenkraft, vorzugsweise die Kraft wenigstens einer Rückholfeder (35, 63), aus einer radial inneren in eine radial äußere Lage verstellbar ist.

6. Werkzeug nach einem der Ansprüche 2 bis 5, **dadurch gekennzeichnet, daß** das Hubelement (17', 18') durch eine Stellstange (25) radial verstellbar ist.

7. Werkzeug nach Anspruch 6, **dadurch gekennzeichnet, daß** die Stellstange (25) axial verschiebbar im Grundkörper (1) gelagert ist.

8. Werkzeug nach Anspruch 6 oder 7, **dadurch gekennzeichnet, daß** die Stellstange (25) eine Steuerfläche (43) aufweist, mit der das Hubelement (17', 18') radial angesteuert und anschließend zwischen einem geraden Steuerflächenabschnitt (46) und einer Querbohrung (28) im Grundkörper (1) vorgespannt wird.

9. Werkzeug nach einem der Ansprüche 6 bis 8, **dadurch gekennzeichnet, daß** das Hubelement (17', 18') mit einer Kugel (42) an der Steuerfläche (43) anliegt.

10. Werkzeug nach Anspruch 8 oder 9, **dadurch gekennzeichnet, daß** die Steuerfläche (43) einen geraden, radial inneren Steuerflächenabschnitt (44) aufweist, der über einen schrägen Steuerflächenabschnitt (45) mit einem geraden, radial äußeren Steuerflächenabschnitt (46) verbunden ist.

11. Werkzeug nach einem der Ansprüche 1 bis 10, **dadurch gekennzeichnet, daß** das Hubelement (17', 18') von wenigstens einer Druckluftbohrung (51) durchsetzt ist, die in eine Außenseite (26) des Hubelementes (17', 18') mündet und mit einer Druckluftzuführung (49) im Grundkörper (1) leitungsverbunden ist.

12. Werkzeug nach einem der Ansprüche 1 bis 11, **dadurch gekennzeichnet, daß** der Grundkörper (1) mit wenigstens einem Stützelement (17, 18) versehen ist, das über den Umfang des Grundkörpers (1) ragt.

13. Werkzeug nach Anspruch 12, **dadurch gekennzeichnet, daß** die Stirnseite (26) des Stützelementes (17, 18) und die Außenseite (26) des radial nach außen verstellten Hubelementes (17', 18') in einer gemeinsamen gedachten Zylinderfläche liegen.

14. Werkzeug nach Anspruch 12 oder 13, **dadurch gekennzeichnet, daß** das Stützelement (17, 18) starr am Grundkörper (1) vorgesehen ist.

15. Werkzeug nach einem der Ansprüche 1 bis 14, **dadurch gekennzeichnet, daß** der Grundkörper (1, 1a, 1b) während der Bearbeitung des Werkstückes (10) an mindestens einem Führungslager (15, 16) abgestützt ist.

16. Werkzeug nach Anspruch 15, **dadurch gekennzeichnet, daß** der Grundkörper (1, 1a, 1b) mit dem radial verstellbaren Hubelement (17', 18') an einem Innenring (21, 22) des Führungslagers (15, 16) anliegt.

17. Werkzeug nach Anspruch 15 oder 16, **dadurch gekennzeichnet, daß** das Führungslager (15, 16) im Werkstück (10) oder außerhalb des Werkstückes angeordnet ist.

18. Werkzeug nach einem der Ansprüche 1 bis 17, **dadurch gekennzeichnet, daß** der Grundkörper (1) wenigstens einen Mitnehmer (47) aufweist, der in Drehrichtung des Werkzeuges formschlüssig mit dem Führungslager (15, 16) verbunden ist.

19. Werkzeug nach Anspruch 18, **dadurch gekennzeichnet, daß** der Mitnehmer (47) in eine axiale Nut (48) des Innenringes (21, 22) des Führungslagers (15, 16) eingreift.

20. Werkzeug nach Anspruch 18 oder 19, **dadurch gekennzeichnet, daß** der Mitnehmer (47) in Höhe der Schneiden (2 bis 5) liegt, in Achsrichtung des Grundkörpers (1) gesehen.

21. Werkzeug nach einem der Ansprüche 2 bis 20, **dadurch gekennzeichnet, daß** das Hubelement (17', 18') mit einem Kolben (53) versehen ist, der mit Druckmedium beaufschlagbar ist.

22. Werkzeug nach Anspruch 21, **dadurch gekennzeichnet, daß** das Hubelement (17', 18') mit einem radial im Grundkörper (1) gelagerten Rückholelement (52) versehen ist.

23. Werkzeug nach Anspruch 22, **dadurch gekennzeichnet, daß** das Rückholelement (52) die Stellstange (25) radial durchsetzt.

24. Werkzeug nach Anspruch 22 oder 23, **dadurch gekennzeichnet, daß** das freie Ende des Rückholelementes (52) mit einem Kolben (58) versehen ist.

25. Werkzeug nach Anspruch 24, **dadurch gekennzeichnet, daß** die beaufschlagbare Fläche (60) des Kolbens (58) des Rückholelementes (52) kleiner ist als die beaufschlagbare Fläche (61) des Kolbens (53) des Hubelementes (17', 18').

26. Werkzeug nach einem der Ansprüche 22 bis 25, **dadurch gekennzeichnet, daß** das Rückholelement (52) von einer Druckluftbohrung (65) durchsetzt ist, die mit einer das Hubelement (17', 18') durchsetzenden Druckluftbohrung (66) strömungsverbunden ist.

27. Werkzeug nach einem der Ansprüche 12 bis 26, **dadurch gekennzeichnet, daß** das Stützelement (17, 18) mit wenigstens einer Druckluftbohrung (68, 69) versehen ist, die in die Stirnseite (26) des Stützelementes (17, 18) mündet.

28. Werkzeug nach einem der Ansprüche 6 bis 27, **dadurch gekennzeichnet, daß** wenigstens eine weitere Stellstange (25', 25'', 25''') im Grundkörper (1) verschiebbar gelagert ist, und daß die Stellstangen unabhängig voneinander betätigbar sind.

29. Werkzeug nach Anspruch 28, **dadurch gekennzeichnet, daß** die Stellstangen (25', 25'', 25''') im Querschnitt sektorförmig ausgebildet sind.

30. Werkzeug nach Anspruch 1, **dadurch gekennzeichnet, daß** das Hubelement (73, 74) starr mit dem Grundkörper (1a, 1b) verbunden ist.

31. Werkzeug nach Anspruch 1 oder 30, **dadurch gekennzeichnet, daß** das Hubelement (73, 74) einstükkig mit dem Grundkörper (1a, 1b) ausgebildet ist.

32. Werkzeug nach Anspruch 1, **dadurch gekennzeichnet, daß** das Hubelement (73, 74) Teil einer am Grundkörper (1, 1a, 1b) wälz- oder gleitgelagerten, axial unverschiebbaren Rotationshülse ist, die sich im Führungslager (15, 16) abstützt.

33. Werkzeug nach einem der Ansprüche 1 und 30 bis 32, **dadurch gekennzeichnet, daß** das Hubelement (73, 74) als Kegelstumpf ausgebildet ist.

34. Werkzeug nach einem der Ansprüche 1, 30, 31 oder 33, **dadurch gekennzeichnet, daß** das Hubelement (73, 74) am Übergang zwischen zwei Grundkörperabschnitten (71, 72) vorgesehen ist, die unterschiedlichen Durchmesser haben.

35. Werkzeug nach einem der Ansprüche 1, 30, 33 oder 34, **dadurch gekennzeichnet, daß** der Grundkörper (1a, 1b) wenigstens ein zweites Hubelement (73, 74) aufweist, das mit Abstand vom ersten Hubelement vorgesehen ist.

36. Werkzeug nach Anspruch 35, **dadurch gekennzeichnet, daß** das zweite Hubelement (74) am freien Ende des Grundkörpers (1a, 1b) vorgesehen ist.

37. Werkzeug nach Anspruch 35 oder 36, **dadurch gekennzeichnet, daß** das zweite Hubelement (74) als Kegelstumpf ausgebildet ist.

38. Werkzeug nach einem der Ansprüche 1 bis 37, **dadurch gekennzeichnet, daß** das Werkzeug zur Vermessung der fertigen Bohrungen (6 bis 9) wenigstens eine Meßeinrichtung (83) aufweist.

39. Werkzeug nach Anspruch 38, **dadurch gekennzeichnet, daß** die Meßeinrichtung (83) wenigstens eine Meßdüse (84) aufweist, die an eine Druckluftbohrung (85) angeschlossen ist.

40. Werkzeug nach Anspruch 39, **dadurch gekennzeichnet, daß** die Meßdüse (84) in einen Aufnahmeraum (86) einer fliehkraftgesteuerten Wippe (87) ragt.

41. Werkzeug nach Anspruch 40, **dadurch gekennzeichnet, daß** bei der Arbeitsdrehzahl (n_{Bearbeitung}) des Werkzeuges die fliehkraftgesteuerte Wippe (87) die Meßdüse (84) verschließt.

42. Werkzeug nach Anspruch 40 oder 41, **dadurch gekennzeichnet, daß** die fliehkraftgesteuerte Wippe (87) zur Einstellung eines Meßspaltes (s) zwischen einer Meßfläche (101) der Wippe (87) und der Wandung der Bohrungen (6 bis 9) mit einem Einstellelement (93), vorzugsweise einer Einstellschraube, versehen ist.

43. Werkzeug nach Anspruch 38 oder 39, **dadurch gekennzeichnet, daß** die Meßdüse (84) in einer durch die Stellstange (25) gesteuerten Wippe angeordnet ist.

44. Verfahren zur Bearbeitung von Bohrungen in einem Werkstück unter Verwendung eines Werkzeuges nach einem der Ansprüche 1 bis 43, bei dem das Werkzeug in Achsrichtung in die Bohrungen des Werkstückes eingeführt und anschließend mit den Schneiden des rotierenden Werkzeuges die Bohrungen bearbeitet werden, **dadurch gekennzeichnet, daß** das Werkzeug exzentrisch in die Werkstückbohrungen (6 bis 9) eingeführt wird, daß das Werkzeug mit dem Hubelement (17', 18', 73, 74) in den Werkstückbohrungen (6 bis 9) zentriert wird, sobald sich die Schneiden (2 bis 5) vor den Werkstückbohrungen (6 bis 9) befinden, und daß anschließend das Werkzeug rotierend angetrieben und axial in Vorschubrichtung bewegt wird.

45. Verfahren nach Anspruch 44, **dadurch gekennzeichnet, daß** das Werkzeug durch radiales Ausfahren des Hubelementes (17', 18') aus seiner exzentrischen in seine zentrische Lage verstellt wird.

46. Verfahren nach Anspruch 44, **dadurch gekennzeichnet, daß** das Werkzeug durch Axialverschieben aus seiner exzentrischen in seine zentrische Lage verstellt wird.

47. Verfahren nach einem der Ansprüche 44 bis 46, **dadurch gekennzeichnet, daß** unmittelbar im Anschluß an die Bearbeitung der Bohrungen (6 bis 9) deren Durchmesser gemessen wird.

48. Verfahren nach Anspruch 47, **dadurch gekennzeichnet, daß** der Bohrungsdurchmesser bei stillstehendem Werkzeug gemessen wird.

49. Verfahren zur Bearbeitung von Bohrungen in einem Werkstück unter Verwendung eines Werkzeuges nach einem der Ansprüche 1 bis 43, bei dem das Werkzeug in Achsrichtung in die Bohrungen des Werkstückes eingeführt und anschließend mit den Schneiden des rotierenden Werkzeuges die Bohrungen bearbeitet werden, **dadurch gekennzeichnet, daß** das Werkzeug durch Bewegung wenigstens einer Maschinenachse aus einer exzentrischen in eine zentrische Lage bezüglich der Werkstückbohrungen (6 bis 9) verstellt und anschließend durch das Hubelement (17', 18', 73, 74) in dieser Lage während der Bearbeitung gehalten wird.

## Claims

1. Tool having a base body which carries cutters for machining bores in a workpiece, said cutters being arranged coaxially with one another, **characterized in that** the base body (1, 1a, 1b) has at least one integrated lifting element (17', 18', 73, 74), with which the base body (1, 1a, 1b) can be moved from an eccentric insertion position in relation to the axis (20) of the workpiece bores (6 to 9) into a central machining position, in which the axis (19) of the tool coincides with the axis (20) of the workpiece bores (6 to 9).

2. Tool according to Claim 1, **characterized in that** the lifting element (17', 18') is mounted in the base body (1) such that it can be adjusted radially.

3. Tool according to Claim 2, **characterized in that** the lifting element (17', 18') can be adjusted mechanically.

4. Tool according to Claim 2, **characterized in that** the lifting element (17', 18') can be adjusted by means of a pressure medium.

5. Tool according to one of Claims 2 to 4, **characterized in that** the lifting element (17', 18') can be adjusted from a radially inner position into a radially outer position counter to an opposing force, preferably the force of at least one restoring spring (35, 63).

6. Tool according to one of Claims 2 to 5, **characterized in that** the lifting element (17', 18') can be adjusted radially by a control rod (25).

7. Tool according to Claim 6, **characterized in that** the control rod (25) is mounted in the base body (1) such that it can be displaced axially.

8. Tool according to Claim 6 or 7, **characterized in that** the control rod (25) has a control face (43) with which the lifting element (17', 18') is driven radially and then prestressed between a straight control face portion (46) and a transverse bore (28) in the base body (1).

9. Tool according to one of Claims 6 to 8, **characterized in that** the lifting element (17', 18') rests with a ball (42) on the control face (43).

10. Tool according to Claim 8 or 9, **characterized in that** the control face (43) has a straight, radially inner control face portion (44) which is connected by an inclined control face portion (45) to a straight, radially outer control face portion (46).

11. Tool according to one of Claims 1 to 10, **characterized in that** the lifting element (17', 18') is penetrated by at least one compressed-air bore (51), which opens into an outer side (26) of the lifting element (17', 18') and is connected by a line to a compressed air supply (49) in the base body (1).

12. Tool according to one of Claims 1 to 11, **characterized in that** the base body (1) is provided with at least one supporting element (17, 18), which projects beyond the periphery of the base body (1).

13. Tool according to Claim 12, **characterized in that** the end (26) of the supporting element (17, 18) and the outer side (26) of the lifting element (17', 18'), when adjusted radially outward, lie in a common imaginary cylindrical surface.

14. Tool according to Claim 12 or 13, **characterized in that** the supporting element (17, 18) is provided rigidly on the base body (1).

15. Tool according to one of Claims 1 to 14, **characterized in that**, during the machining of the workpiece (10), the base body (1, 1a, 1b) is supported on at least one guide bearing (15, 16).

16. Tool according to Claim 15, **characterized in that** the base body (1, 1a, 1b) rests with the radially adjustable lifting element (17', 18') on an inner ring (21, 22) of the guide bearing (15, 16).

17. Tool according to Claim 15 or 16, **characterized in that** the guide bearing (15, 16) is arranged in the workpiece (10) or outside the workpiece.

18. Tool according to one of Claims 1 to 17, **characterized in that** the base body (1) has at least one driver (47) which, in the direction of rotation of the tool, is positively connected to the guide bearing (15, 16).

19. Tool according to Claim 18, **characterized in that** the driver (47) engages in an axial groove (48) in the inner ring (21, 22) of the guide bearing (15, 16).

20. Tool according to Claim 18 or 19, **characterized in that**, as viewed in the axial direction of the base body (1), the driver (47) is located at the level of the cutters (2 to 5).

21. Tool according to one of Claims 2 to 20, **characterized in that** the lifting element (17', 18') is provided with a piston (53) to which pressure medium can be applied.

22. Tool according to Claim 21, **characterized in that** the lifting element (17', 18') is provided with a restoring element (52) mounted radially in the base body (1).

23. Tool according to Claim 22, **characterized in that** the restoring element (52) passes radially through the control rod (25).

24. Tool according to Claim 22 or 23, **characterized in that** the free end of the restoring element (52) is provided with a piston (58).

25. Tool according to Claim 24, **characterized in that** the area (60) of the piston (58) of the restoring element (52) to which pressure can be applied is smaller than the area (61) of the piston (53) of the lifting element (17', 18') to which pressure can be applied.

26. Tool according to one of Claims 22 to 25, **characterized in that** the restoring element (52) is penetrated by a compressed-air bore (65), which has a flow connection to a compressed-air bore (66) passing through the lifting element (17', 18').

27. Tool according to one of Claims 12 to 26, **characterized in that** the supporting element (17, 18) is provided with at least one compressed-air bore (68, 69), which opens into the end (26) of the supporting element (17, 18).

28. Tool according to one of Claims 6 to 27, **characterized in that** at least one further control rod (25', 25'', 25''') is mounted in the base body (1) such that it can be adjusted, and **in that** the control rods can be operated independently of one another.

29. Tool according to Claim 28, **characterized in that** the control rods (25', 25'', 25''') are designed with a sector-like cross section.

30. Tool according to Claim 1, **characterized in that** the lifting element (73, 74) is rigidly connected to the base body (1a, 1b).

31. Tool according to Claim 1 or 30, **characterized in that** the lifting element (73, 74) is formed in one piece with the base body (1a, 1b).

32. Tool according to Claim 1, **characterized in that** the lifting element (73, 74) is part of a rotation sleeve which is mounted such that it can roll or slide on the base body (1, 1a, 1b) but cannot be displaced axially, and is supported in the guide bearing (15, 16).

33. Tool according to one of Claims 1 and 30 to 32, **characterized in that** the lifting element (73, 74) is designed as a truncated cone.

34. Tool according to one of Claims 1, 30, 31 or 33, **characterized in that** the lifting element (73, 74) is provided at the transition between two base body sections (71, 72) which have different diameters.

35. Tool according to one of Claims 1, 30, 33 or 34, **characterized in that** the base body (1a, 1b) has at least a second lifting element (73, 74) which is provided at a distance from the first lifting element.

36. Tool according to Claim 35, **characterized in that** the second lifting element (74) is provided at the free end of the base body (1a, 1b).

37. Tool according to Claim 35 or 36, **characterized in that** the second lifting element (74) is designed as a truncated cone.

38. Tool according to one of Claims 1 to 37, **characterized in that** the tool has at least one measuring device (83) for measuring the finished bores (6 to 9).

39. Tool according to Claim 38, **characterized in that** the measuring device (83) has at least one measuring nozzle (84), which is connected to a compressed-air bore (85).

40. Tool according to Claim 39, **characterized in that** the measuring nozzle (84) projects into a mounting space (86) of a centrifugal force-controlled rocker (87).

41. Tool according to Claim 40, **characterized in that**, at the working speed (N_{Work}) of the tool, the centrifugal force-controlled rocker (87) closes the measuring nozzle (84).

42. Tool according to Claim 40 or 41, **characterized in that** the centrifugal force-controlled rocker (87) is provided with a setting element (93), preferably a setting screw, in order to set a measuring gap (s) between a measuring face (101) of the rocker (87) and the wall of the bores (6 to 9).

43. Tool according to Claim 38 or 39, **characterized in that** the measuring nozzle (84) is arranged in a rocker controlled by the control rod (25).

44. Method of machining bores in a workpiece, using a tool according to one of Claims 1 to 43, in which the tool is inserted in the axial direction into the bores in the workpiece and the bores are then machined with the cutters of the rotating tool, **characterized in that** the tool is inserted eccentrically into the workpiece bores (6 to 9), **in that** the tools are centred in the workpiece bores (6 to 9) by the lifting element (17', 18', 73, 74) as soon as the cutters (2 to 5) are located in front of the workpiece bores (6 to 9), and **in that** the tool is subsequently driven in rotation and moved axially in the advance direction.

45. Method according to Claim 44, **characterized in that** the tool is adjusted from its eccentric position into its central position by moving the lifting element (17', 18') radially.

46. Method according to Claim 44, **characterized in that** the tool is adjusted from its eccentric position into its central position by axial displacement.

47. Method according to one of Claims 44 to 46, **characterized in that**, directly following the machining of the bores (6 to 9), their diameter is measured.

48. Method according to Claim 47, **characterized in that** the bore diameter is measured with the tool stationary.

49. Method for machining bores in a workpiece, using a tool according to one of Claims 1 to 43, in which the tool is inserted in the axial direction into the bores in the workpiece and the bores are then machined with the cutters of the rotating tool, wherein the tool is adjusted from an eccentric position into a central position with respect to the workpiece bores (6 to 9) by moving at least one machine axis, and is subsequently kept in this position by the lifting element (17', 18', 73, 74) during the machining.

## Revendications

1. Outil comportant un corps de base portant des lames coaxiales entre elles pour pratiquer des alésages dans une pièce,
**caractérisé en ce que**
les corps de base (1, 1a, 1b) présente un élément de levage (17', 18', 73, 74) intégré permettant de déplacer le corps de base (1, 1a, 1b) d'une position d'introduction excentrée par rapport à l'axe (20) des alésages (6 à 9) de la pièce à une position centrale d'usinage dans laquelle l'axe (19) de l'outil coïncide avec l'axe (20) des alésages (6 à 9) dans la pièce.

2. Outil selon la revendication 1,
caractérisé en que
l'élément de levage (17', 18') est réglable radialement dans le corps de base (1).

3. Outil selon la revendication 2,
**caractérisé en ce que**
l'élément de levage (17', 18') est déplaçable mécaniquement.

4. Outil selon la revendication 2,
**caractérisé en ce que**
l'élément de levage (17', 18') peut être déplacé par un fluide sous pression.

5. Outil selon l'une quelconque des revendications 2 à 4,
**caractérisé en ce que**
l'élément de levage (17', 18') peut passer d'une position radialement interne à une position radialement externe, contre une force d'opposition, de préférence exercée par au moins un ressort de rappel (35, 63).

6. Outil selon l'une quelconque des revendications 2 à 5,
**caractérisé en ce que**
l'élément de levage (17', 18') est réglable radialement par une tige de positionnement (25).

7. Outil selon la revendication 6,
**caractérisé en ce que**
la tige de positionnement (25) peut coulisser axialement dans le corps de base (1).

8. Outil selon l'une quelconque des revendications 6 ou 7,
**caractérisé en ce que**
la tige de positionnement (25) présente une portée de commande (43) par laquelle l'élément de levage (17', 18') est commandé radialement et ensuite pressé entre une partie droite (46) de la portée de commande et un alésage transversal (28) pratiqué dans le corps de base (1).

9. Outil selon l'une quelconque des revendications 6 à 8,
**caractérisé en ce que**
l'élément de levage (17', 18') est appliqué sur la portée de commande (43) par l'intermédiaire d'une bille (42).

10. Outil selon l'une quelconque des revendications 8 ou 9,
**caractérisé en ce que**
la portée de commande (43) présente une partie droite (44) radialement interne qui est reliée par une partie oblique (45) à une partie droite (46) radialement externe.

11. Outil selon l'une quelconque des revendications 1 à 10,
**caractérisé en ce que**
l'élément de levage (17', 18') est traversé par au moins un alésage à air comprimé (51) qui déborde sur le côté externe (26) de l'élément de levage (17', 18') et est relié à une amenée d'air comprimé (49) prévue dans le corps de base (1).

12. Outil selon les revendications 1 à 11,
**caractérisé en ce que**
le corps de base (1) présente au moins un élément de soutien (17, 18) faisant saillie sur la périphérie du corps de base (1).

13. Outil selon la revendication 12,
**caractérisé en ce que**
la face frontale (26) de l'élément de soutien (17, 18) et la face externe (26) de l'élément de levage (17', 18') déplacé radialement vers l'extérieur, se trouvent sur une même surface cylindrique idéale.

14. Outil selon l'une quelconque des revendications 12 ou 13,
**caractérisé en ce que**
l'élément de soutien (17, 18) est prévu monté rigidement sur le corps de base (1).

15. Outil selon l'une quelconque des revendications 1 à 14,
**caractérisé en ce que**
le corps de base (1, 1a, 1b) pendant l'usinage de la pièce (10) est en appui sur au moins un palier de guidage (15, 16).

16. Outil selon la revendication 15,
**caractérisé en ce que**
le corps de base (1, 1a, 1b) est en contact par l'élément de levage (17', 18') mobile radialement, avec une bague interne (21, 22) du palier de guidage (15, 16).

17. Outil selon l'une quelconque des revendications 15 ou 16,
**caractérisé en ce que**
le palier de guidage (15, 16) est monté dans la pièce (10) ou à l'extérieur de celle-ci.

18. Outil selon l'une quelconque des revendications 1 à 17,
**caractérisé en ce que**
le corps de base (1) présente au moins un entraînement (47) qui dans la direction de rotation de l'outil, est relié par combinaison de forme au palier de guidage (15, 16).

19. Outil selon la revendication 18,
**caractérisé en ce que**
l'entraînement (47) est en prise avec une rainure axiale (48) dans la bague interne (21, 22) du palier de guidage (15, 16).

20. Outil selon l'une quelconque des revendications 18 ou 19,
**caractérisé en ce que**
l'entraînement (47), observé selon la direction axiale de corps de base (1) est à la même hauteur que les lames (2 à 5).

21. Outil selon l'une quelconque des revendications 2 à 20,
**caractérisé en ce que**
l'élément de levage (17', 18') est équipé d'un piston (53) qui peut être actionné par un fluide sous pression.

22. Outil selon la revendication 21,
**caractérisé en ce que**
l'élément de levage (17', 18') est équipé d'un élément de rappel (52) monté radialement dans le corps de base (1).

23. Outil selon la revendication 22,
**caractérisé en ce que**
l'élément de rappel (52) traverse radialement la tige de positionnement (25).

24. Outil selon l'une quelconque des revendications 22 ou 23,
**caractérisé en ce que**
l'extrémité libre de l'élément du rappel (52) est équipée d'un piston (58).

25. Outil selon la revendication 24,
**caractérisé en ce que**
la face sous pression (60) du piston (58) de l'élément de rappel (52) est plus petite que la face sous pression actionnable (61) du piston (53) de l'élément de levage (17', 18').

26. Outil selon l'une quelconque des revendications 22 à 25,
**caractérisé en ce que**
l'élément de rappel (52) est traversé par un alésage d'air (65) relié à un autre alésage d'air (66) traversant l'élément de levage (17', 18').

27. Outil selon l'une quelconque des revendications 12 à 26,
**caractérisé en ce que**
l'élément de soutien (17, 18) est équipé d'au moins un alésage d'air comprimé (68, 69) débouchant dans la face frontale (26) de l'élément de soutien (17, 18).

28. Outil selon l'une des quelconques revendications 6 à 27,
**caractérisé en ce que**
au moins une autre tige de positionnement (25', 25'', 25''') peut coulisser dans le corps de base (1), les tiges de positionnement étant manoeuvrables indépendamment l'une de l'autre.

29. Outil selon la revendication 28,
**caractérisé en ce que**
les tiges de positionnement (25', 25'', 25''') ont, en section, la forme d'un secteur .

30. Outil selon la revendication 1,
**caractérisé en ce que**
l'élément de levage (73, 74) est relié rigidement au corps de base (1a, 1b).

31. Outil selon l'une quelconque des revendications 1 ou 30,
**caractérisé en ce que**
l'élément de levage (73, 74) est monobloc avec le corps de base (1a, 1b).

32. Outil selon la revendication 1,
**caractérisé en ce que**
l'élément de levage (73, 74) est une partie d'une douille rotative montée à glissement ou à roulement, sans pouvoir coulisser, sur le corps de base (1, 1a, 1b) et qui est portée par des roulements de guidage (15, 16).

33. Outil selon la revendication 1 et l'une quelconque des revendications 30 à 32,
**caractérisé en ce que**
l'élément de levage (73, 74) a la forme d'un tronc de cône.

34. Outil selon l'une quelconque des revendications 1, 30, 31 ou 33,
**caractérisé en ce que**
l'élément de levage (73, 74) est prévu à la transition entre deux parties (71, 72) de corps de base, présentant des diamètres différents.

35. Outil selon l'une quelconque des revendications, 1, 30, 33 ou 34
**caractérisé en ce que**
le corps de base (1a, 1b) présente au moins un deuxième élément de levage (73, 74), à distance du premier.

36. Outil selon la revendication 35,
**caractérisé en ce que**
le deuxième élément de levage (74) est prévu à l'extrémité libre du corps de base (1a, 1b).

37. Outil selon l'une quelconque des revendications 35 ou 36,
**caractérisé en ce que**
le deuxième éleveur de levage (74) a la forme d'un tronc de cône.

38. Outil selon l'une quelconque des revendications 1 à 37,
**caractérisé en ce que**
l'outil pour mesurer les alésages achevés (6 à 9) comprend au moins un dispositif de mesure (83).

39. Outil selon la revendication 38,
**caractérisé en ce que**
le dispositif de mesure (83) possède au moins une buse de mesure (84) raccordée à l'alésage d'air comprimé (85).

40. Outil selon la revendication 39,
**caractérisé en ce que**
la base de mesure (84) fait saillie dans le logement (86) accueillant un basculeur (87) commandé par la force centrifuge.

41. Outil selon la revendication 40,
**caractérisé en ce que**
à la vitesse de travail (n usinage) de l'outil, le basculeur (87) commandé par la force centrifuge ferme la buse de mesure (84).

42. Outil selon l'une quelconque des revendications 40 ou 41,
**caractérisé en ce que**
le basculeur (87) commandé par la force centrifuge pour établir une fente de mesure (s) entre une surface (101) du basculeur (87) et la paroi des alésages (6 à 9), est équipé d'un élément de réglage (93) de préférence une vis de réglage.

43. Outil selon l'une quelconque des revendications 38 ou 39,
**caractérisé en ce que**
la base de mesure (84) est montée dans un basculeur commandé par la tige de positionnement (25).

44. Procédé pour pratiquer des alésages dans une pièce en utilisant un outil selon l'une des revendications 1 à 43, dans lequel l'outil est introduit en direction axiale dans les alésages de la pièce, puis ces alésages sont usinés par les lames de l'outil tournant,
**caractérisé en ce que**
l'outil est introduit excentré dans les alésages (6 à 9) de la pièce, il est centré dans ces alésages (6 à 9) par l'élément de levage (17', 18', 73, 74) dès que les lames (2 à 5) se trouvent devant les alésages (6 à 9), et ensuite il est entraîné en rotation et déplacé axialement en direction d'avancement.

45. Procédé selon la revendication 44,
**caractérisé en ce que**
l'outil, par sortie radiale de l'élément de levage (17', 18') est amené de sa position excentrée à sa position centrée.

46. Procédé selon la revendication 44,
**caractérisé en ce que**
l'outil, par coulissement axial, passe de sa position excentrée à sa position centrée.

47. Procédé selon l'une quelconque des revendications 44 à 46,
**caractérisé en ce que**
immédiatement après l'usinage des alésages (6 à 9), le diamètre de ceux-ci est mesuré.

48. Procédé selon la revendication 47,
**caractérisé en ce que**
le diamètre d'alésage est mesuré, l'outil arrêté.

49. Procédé pour pratiquer des alésages dans une pièce en utilisant un outil selon l'une des revendications 1 à 43, dans lequel l'outil est introduit en direction axiale dans les alésages de la pièce, puis ces alésages sont usinés par les lames de l'outil tournant,
**caractérisé en ce que**
l'outil, par le déplacement d'au moins un axe de la machine, passe d'une position excentrée à une position centrée par rapport aux alésages (6 à 9), et est ensuite maintenu par l'élément de levage (17', 18', 73, 74) dans cette position pendant l'usinage.
